# EUROPÄISCHE PATENTSCHRIFT

(11) **EP 0 591 736 B1**
(45) Veröffentlichungstag und Bekanntmachung des Hinweises auf die Patenterteilung: **04.04.2001**
(21) Anmeldenummer: 93114987.6
(22) Anmeldetag: 17.09.1993
(51) Int. Cl.: C09B 55/00, C09B 23/04, C09B 67/00, B41M 5/38

(54) **Verwendung von Pyridinfarbstoffen im textilen Bereich, Farbstoffmischungen, enthaltend Pyridinfarbstoffe, sowie Triazolopyridinfarbstoffe mit einem Thienylrest**
Use of pyridine dyes for textiles, mixtures of dyes containing pyridine dyes, and triazolopyridine dyes with a thienyl radical
Utilisation de colorants pyridiniques dans le domaine textile, mélanges de colorants contenant des colorants pyridiniques ainsi que des colorants triazolopyridiniques avec un reste thienyle

(30) Priorität: 29.09.1992 DE 4232557
(43) Veröffentlichungstag der Anmeldung: 13.04.1994
(73) Patentinhaber: BASF Aktiengesellschaft, 67063 Ludwigshafen (DE)
(72) Erfinder: Lange, Arno, Dr., D-6702 Bad Duerkheim (DE); Bach, Volker, Dr., D-6730 Neustadt (DE); Sens, Ruediger, Dr., D-6800 Mannheim 1 (DE); Etzbach, Karl-Heinz, Dr., D-6710 Frankenthal (DE); Reichelt, Helmut, dr., D-6730 Neustadt (DE); Gruettner-Merten, Sabine, Dr., D-6704 Mutterstadt (DE)

(56) Entgegenhaltungen:
- EP-A- 0 416 434
- EP-A- 0 480 252
- EP-A- 0 532 007
- WO-A-92/19684
- DE-A- 2 012 050

## Beschreibung

Die vorliegende Erfindung betrifft Farbstoffmischungen, enthaltend einen oder mehrere Pyridinfarbstoffe der Formel Ia oder Ib 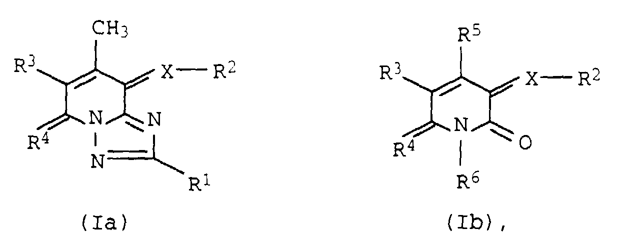 worin
- R¹: C₁-C₂₀-Alkyl, das gegebenenfalls substituiert ist und durch ein oder mehrere Sauerstoffatome in Etherfunktion unterbrochen sein kann, gegebenenfalls substituiertes Phenyl oder Hydroxy,
- R²: einen 5- oder 6-gliedrigen carbocyclischen oder heterocyclischen Rest, der gegebenenfalls substituiert ist und benzoanelliert sein kann,
- R³: Cyano, Carbamoyl, Carboxyl oder C₁-C₄-Alkoxycarbonyl,
- R⁴: Sauerstoff oder einen Rest der Formel C(CN)₂, C(CN)COOL¹ oder C(COOL¹)₂, wobei L¹ jeweils für C₁-C₈-Alkyl, das gegebenenfalls durch 1 oder 2 Sauerstoffatome in Etherfunktion unterbrochen ist, steht,
- R⁵: Wasserstoff oder C₁-C₄-Alkyl,
- R⁶: C₁-C₂₀-Alkyl, das gegebenenfalls substituiert ist und durch ein oder mehrere Sauerstoffatome in Etherfunktion unterbrochen sein kann, gegebenenfalls substituiertes Phenyl, Hydroxy oder einen Rest der Formel NL²L³, wobei L² und L³ gleich oder verschieden sind und unabhängig voneinander jeweils für Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder L² und L³ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf-oder sechsgliedrigen gesättigten heterocyclischen Rest, der gegebenenfalls weitere Heteroatome enthält, stehen, und
- X: Stickstoff oder, wenn R⁴ für einen Rest der Formel C(CN)₂, C(CN)COOL¹ oder C(COOL¹)₂ steht, auch CH bedeuten,
sowie einen oder mehrere blaue Dispersionsfarbstoffe aus der Klasse der Azo-, Methin- oder Anthrachinonfarbstoffe, deren Farbort nach CIELAB (gemäß ISO 7724-3-1984) im folgenden Bereich liegt: Hue: 240 bis 280 und Chroma: > 35, wobei Farbstoffmischungen, bestehend aus einem Pyridinfarbstoff der Formel Ia und einem Anthrachinonfarbstoff der Formel 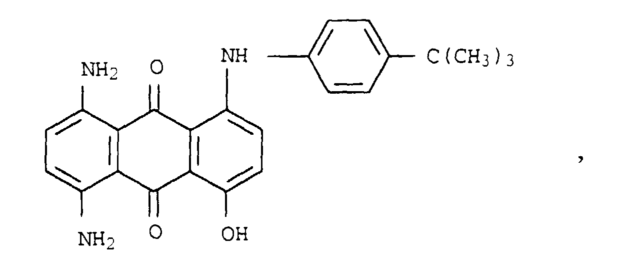 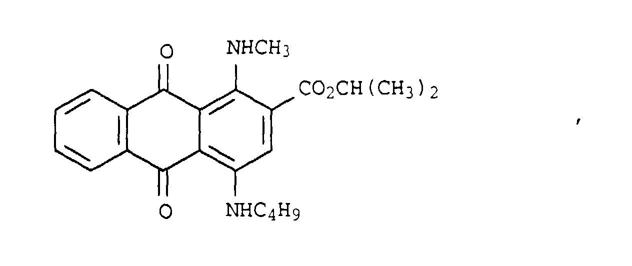 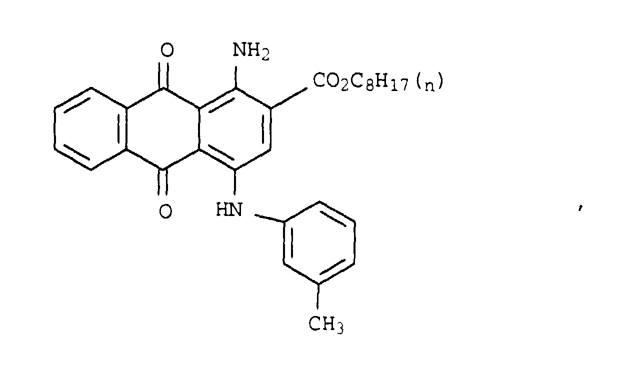 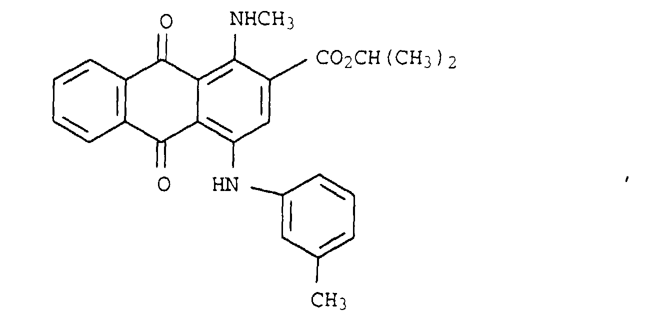 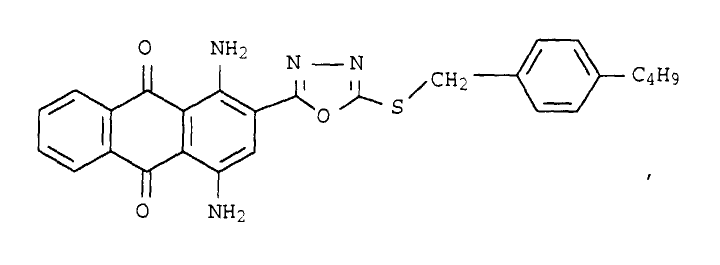 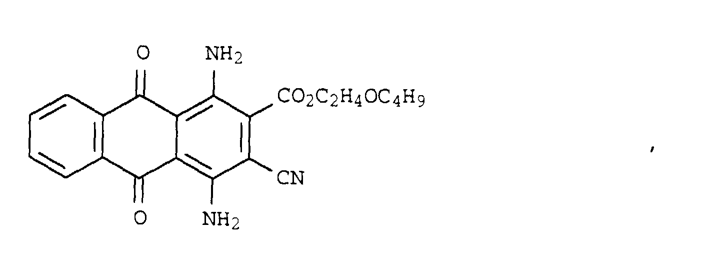 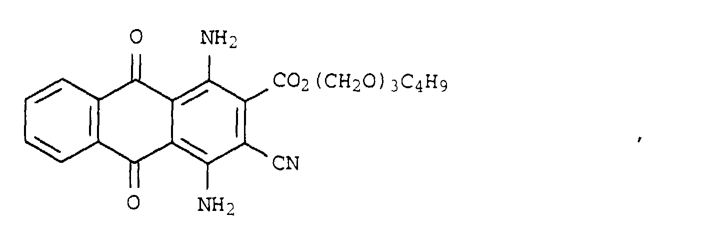 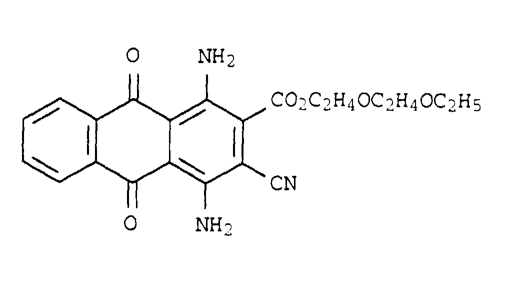 oder 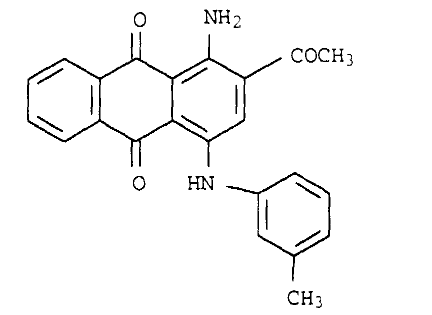 sowie Farbstoffmischungen, bestehend aus den Farbstoffen der Formel 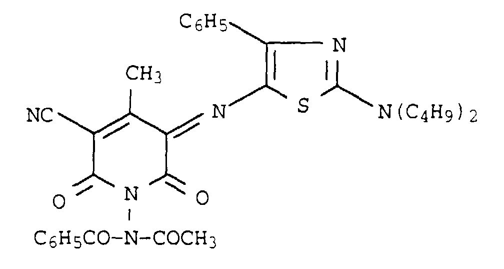 und 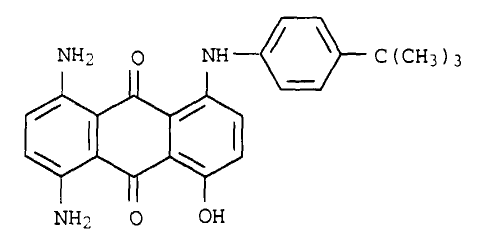 ausgenommen sind, ihre Verwendung zum Färben oder Bedrucken von Synthesefasern, Celluloseestern oder deren Mischungen sowie Triazolopyridinfarbstoffe mit einem Thienylrest.

Die oben ausgeschlossenen Farbstoffmischungen sind in der EP-A-569 784 beschrieben, die als Stand der Technik gemäß A 54(3) EPÜ gilt.

In der EP-A-480 252 werden Pyridonfarbstoffe und ein Verfahren zu ihrer thermischen Übertragung beschrieben.

Wie in der WO-A-92/19684 beschrieben, eignen sich Farbstoffe der Formel (Ib) vorteilhaft zum Färben von synthetischen Materialien, z.B. von Polyestern, Polyamiden oder Polycarbonaten. Insbesondere zu nennen sind textile Gewebe aus Polyester oder Polyamid oder Polyester -Baumwolle-Mischgewebe.

Aufgabe der vorliegenden Erfindung war es, neue Farbstoffmischungen bereitzustellen, die über die obengenannten vorteilhaften anwendungstechnischen Eigenschaften verfügen.

Schließlich sollten auch neue Triazolopyridinfarbstoffe bereitgestellt werden, die sich durch ein vorteilhaftes anwendungstechnisches Eigenschaftsprofil auszeichnen.

Demgemäß wurden die eingangs näher bezeichneten Pyridinfarbstoffmischungen gefunden.

Die Farbstoffe der Formel Ia oder Ib können in mehreren tautomeren Formen auftreten, die alle vom Patentanspruch umfaßt werden. Beispielsweise können die Verbindungen der Formel Ia mit R⁴ = Sauerstoff u.a. in folgenden tautomeren Formen auftreten: 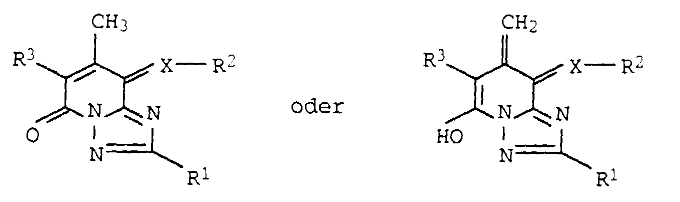 Wenn in den obengenannten Formeln substituierte Alkylreste auftreten, so können als Substituenten, sofern nicht anders vermerkt, z.B. Phenyl, C₁-C₄-Alkylphenyl, C₁-C₄-Alkoxyphenyl, Halogenphenyl, C₁-C₈-Alkanoyloxy, C₁-C₈-Alkylaminocarbonyloxy, C₁-C₂₀-Alkoxycarbonyl, C₁-C₂₀-Alkoxycarbonyloxy, wobei die Alkylkette der beiden letztgenannten Reste gegebenenfalls durch 1 bis 4 Sauerstoffatome in Etherfunktion unterbrochen und/oder durch Phenyl oder Phenoxy substituiert ist, Halogen, Hydroxy oder Cyano in Betracht kommen.

Wenn in den obengenannten Formeln Alkylreste auftreten, die durch Sauerstoffatome in Etherfunktion unterbrochen sind, so sind, sofern nicht anders vermerkt, solche Alkylreste bevorzugt, die durch 1 bis 4 Sauerstoffatome, insbesondere 1 bis 2 Sauerstoffatome, in Etherfunktion unterbrochen sind.

Wenn in den obengenannten Formeln substituierte Phenyl- oder Pyridylreste auftreten, so können als Substituenten, sofern nicht anders vermerkt, z.B. C₁-C₈-Alkyl, C₁-C₈-Alkoxy, Halogen, dabei insbesondere Chlor oder Brom, oder Carboxyl in Betracht kommen. Die Phenyl- oder Pyridylreste weisen dabei in der Regel 1 bis 3 Substituenten auf.

Reste R² können sich z.B. von Komponenten aus der Benzol-, Indol-, Chinolin-, Naphthalin-,Pyrrol-, Thiazol-, Benzimidazol-, Benzthiazol-, Thiophen- oder Diaminopyridinreihe ableiten.

Wichtige Reste R² sind z.B. solche der Formeln IIIa bis IIIu 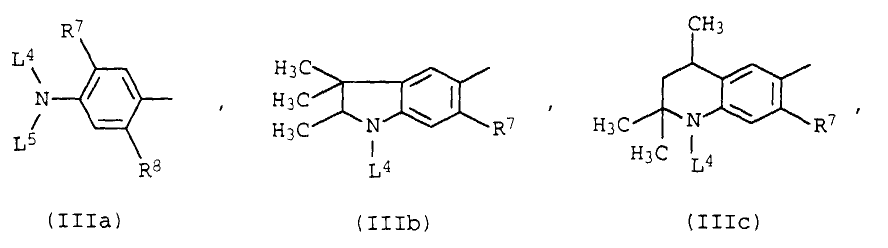 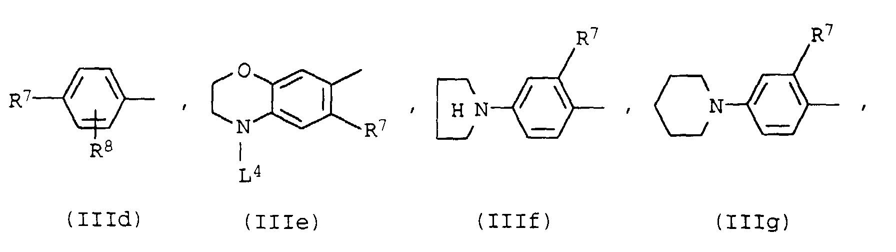 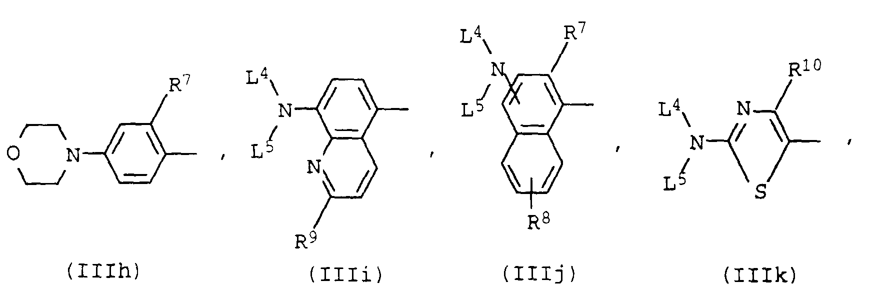 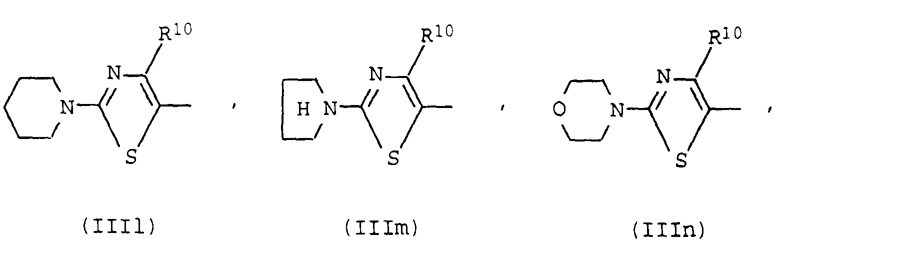 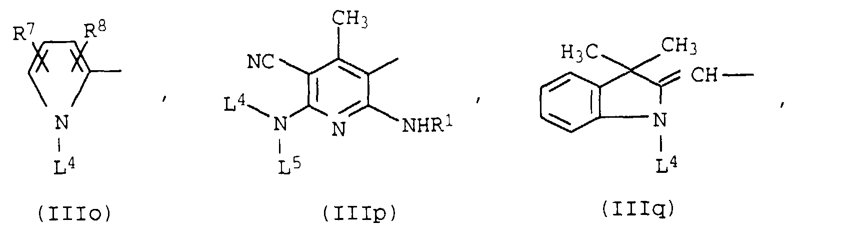 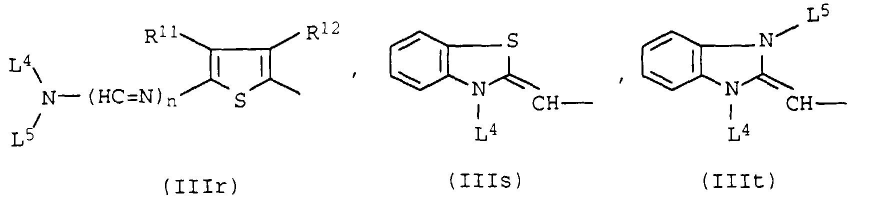 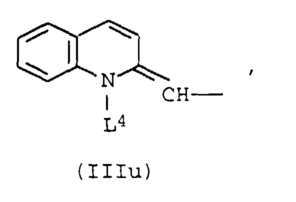 worin
- n: 0 oder 1,
- L⁴ und L⁵: gleich oder verschieden sind und unabhängig voneinander jeweils Wasserstoff oder den obengenannten Rest R¹,
- R⁷ und R⁸: gleich oder verschieden sind und unabhängig voneinander jeweils Wasserstoff, Hydroxy, gegebenenfalls durch Phenyl oder C₁-C₄-Alkylphenyl substituiertes C₁-C₈-Alkyl, gegebenenfalls durch Phenyl oder C₁-C₄-Alkylphenyl substituiertes C₁-C₈-Alkoxy, C₁-C₈-Alkanoylamino, C₁-C₈-Alkylsulfonylamino oder C₁-C₈-Mono- oder Dialkylaminosulfonylamino,
- R⁹: Wasserstoff oder Methyl,
- R¹⁰: Wasserstoff, Halogen, C₁-C₈-Alkyl, gegebenenfalls durch C₁-C₄-Alkyl oder C₁-C₄-Alkoxy substituiertes Phenyl, gegebenenfalls durch C₁-C₄-Alkyl oder C₁-C₄-Alkoxy substituiertes Benzyl, Cyclohexyl, Thienyl, Hydroxy oder C₁-C₈-Monoalkylamino,
- R¹¹: Cyano, Carbamoyl, C₁-C₈-Mono- oder Dialkylcarbamoyl, C₁-C₈-Alkoxycarbonyl oder gegebenenfalls substituiertes Phenyl und
- R¹²: Halogen, Wasserstoff, C₁-C₄-Alkyl, C₁-C₄-Alkoxy, C₁-C₄-Alkylthio, gegebenenfalls durch C₁-C₄-Alkyl oder C₁-C₄-Alkoxy substituiertes Phenyl oder Thienyl bedeuten.

Alle in den obengenannten Formeln auftretenden Alkylreste können sowohl geradkettig als auch verzweigt sein.

Geeignete Reste R¹, R⁵, R⁶, R⁷, R⁸, R¹⁰, R¹², L¹, L² und L³ sind z.B. Methyl, Ethyl, Propyl, Isopropyl, Butyl, Isobutyl, sec-Butyl oder tert-Butyl.

Reste R¹, R⁶, R⁷, R⁸, R¹⁰, L¹, L² und L³ sind weiterhin z.B. Pentyl, Isopentyl, Neopentyl, tert-Pentyl, Hexyl, 2-Methylpentyl, Heptyl, 1-Ethylpentyl, Octyl, 2-Ethylhexyl oder Isooctyl.

Reste R¹, L² und L³ sind weiterhin z.B. Nonyl, Isononyl, Decyl, Isodecyl, Undecyl oder Dodecyl.

Reste R¹ sind weiterhin z.B. Tridecyl, Isotridecyl, Tetradecyl, Pentadecyl, Hexadecyl, Heptadecyl, Octadecyl, Nonadecyl, Eicosyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.), 2-Carboxylethyl, 2-Methoxycarbonylethyl, Benzyl, 1- oder 2-Phenylethyl, 3-Benzyloxypropyl, Phenoxymethyl, 6-Phenoxy-4-oxahexyl, 8-Phenoxy-4-oxaoctyl, 2-, 3- oder 4-Chlorphenyl oder 2-, 3- oder 4-Carboxyl-phenyl.

Reste R¹ und L¹ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2-oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl oder 4,8-Dioxadecyl.

Reste R¹ sind weiterhin z.B. 3,6,9-Trioxadecyl, 3,6,9-Trioxaundecyl, 3,6,9-Trioxadodecyl, 3,6,9,12-Tetraoxatridecyl, 3,6,9,12-Tetraoxatetradecyl, 11-Oxahexadecyl, 13-Butyl-11-oxaheptadecyl oder 4, 11-Dioxapentadecyl.

Reste R³, R¹¹, L² und L³ sind z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste R¹¹ sind weiterhin z.B. Mono- oder Dimethylcarbamoyl, Mono- oder Diethylcarbonyl, Mono- oder Dipropylcarbamoyl, Mono- oder Diisopropylcarbonyl, Mono- oder Dibutylcarbamoyl oder N-Methyl-N-butylcarbamoyl.

Reste R⁷, R⁸ und R¹² sind weiterhin z.B. Methoxy, Ethoxy, Propoxy, Isopropoxy, Butoxy, Isobutoxy oder sec-Butoxy.

Reste R¹² sind weiterhin z.B. Methylthio, Ethylthio, Propylthio, Isopropylthio, Butylthio, Isobutylthio oder sec-Butylthio.

R¹, R¹⁰, R¹², L² und L³ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl oder 2,4-Dimethoxyphenyl.

Reste R¹, L² und L³ sind weiterhin z.B. 2-Hydroxyethyl, 2- oder 3-Hydroxypropyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy) ethyl oder 2- oder 3-(2-Ethoxyethoxycarbonyloxy)propyl.

Reste L² und L³ sind weiterhin z.B. Pyridyl, 2-, 3- oder 4-Methylpyridyl, 2-, 3- oder 4-Methoxypyridyl, Formyl, Acetyl, Propionyl, Butyryl, Isobutyryl, Pentanoyl, Hexanoyl, Heptanoyl, Octanoyl, 2-Ethylhexanoyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, Tolylsulfonyl, Pyridylsulfonyl, Benzoyl, 2-, 3- oder 4-Methylbenzoyl, 2-, 3- oder 4-Methoxybenzoyl, Thien-2-ylcarbonyl, Thien-3-ylcarbonyl, Cyclopentyl, Cyclohexyl oder Cycloheptyl.

Wenn L² und L³ zusammen mit dem sie verbindenden Stickstoffatom einen fünf- oder sechsgliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-(C₁-C₄-Alkyl)piperazinyl in Betracht kommen.

Die Farbstoffe der Formel I sind an sich bekannt und z.B. in der US-A-5 079 365 beschrieben. Dort wird ausgeführt, daß sie sich vorteilhaft für den Thermodiffusionstransfer eignen.

Beim nicht textilen Thermodiffusionstransferdruckverfahren wird ein Transferblatt, welches einen thermisch transferierbaren Farbstoff in einem oder mehreren Bindemitteln, gegebenenfalls zusammen mit geeigneten Hilfsmitteln auf einem Träger enthält, mit einer Energiequelle, z.B. mit einem Laser oder einem Heizkopf, mit kurzen Heizimpulsen (Dauer: Bruchteile einer Sekunde) von der Rückseite her erhitzt, wodurch der Farbstoff aus dem Transferblatt migriert und in die Oberflächenbeschichtung eines mit Kunststoff beschichteten Papiers hineindiffundiert.

Bevorzugt sind Farbstoffmischungen, enthaltend einen oder mehrere Pyridinfarbstoffe der Formel Ia oder Ib, in der X Stickstoff bedeutet.

Weiterhin bevorzugt sind Farbstoffmischungen, enthaltend einen oder mehrere Pyridinfarbstoffen der Formel Ia oder Ib, in der R³ Cyano bedeutet.

Weiterhin bevorzugt sind Farbstoffmischungen, enthaltend einen oder mehrere Pyridinfarbstoffe der Formel Ia oder Ib, in der R² sich von einer Komponente aus der Benzol-, Indol-, Chinolin-, Naphthalin-, Pyrrol-, Thiazol-, Benzimidazol-, Benzthiazol-, Thiophen- oder Diaminopyridinreihe ableitet.

Weiterhin bevorzugt sind Farbstoffmischungen, enthaltend einen oder mehrere Pyridinfarbstoffen der Formel Ia oder Ib, in der R¹ oder R⁶ C₁-C₁₂-Alkyl, des gegebenenfalls durch C₁-C₆-Alkanoyloxy, C₁-C₈-Alkoxycarbonyl, deren Alkylkette jeweils durch 1 oder 2 Sauerstoffatome in Etherfunktion unterbrochen sein kann, Phenyl oder C₁-C₄-Alkylphenyl substituiert ist und durch 1 oder 2 Sauerstoffatome in Etherfunktion unterbrochen sein kann, bedeutet.

Insbesondere bevorzugt sind Farbstoffmischungen, enthaltend einen oder mehrere Pyridinfarbstoffe der Formel Ia oder Ib, in der R¹ oder R⁶ Alkyl, Alkoxyalkyl, Alkanoyloxyalkyl oder Alkoxycarbonylalkyl, wobei diese Reste jeweils bis zu 12 Kohlenstoffatome aufweisen, gegebenenfalls durch Methyl substituiertes Benzyl oder gegebenenfalls durch Methyl substituiertes Phenyl bedeutet.

Weiterhin insbesondere bevorzugt sind Farbstoffmischungen, enthaltend einen oder mehrere Pyridinfarbstoffe der Formel Ia oder Ib, in der R² einen Rest der obengenannten Formel IIIa, IIIc, IIIk, III l, IIIm, IIIn oder IIIr bedeutet, wobei
- L⁴ und L⁵: unabhängig voneinander für Alkyl, Alkoxyalkyl, Alkanoyloxyalkyl oder Alkoxycarbonylalkyl, wobei diese Reste jeweils bis zu 12 Kohlenstoffatome aufweisen, Wasserstoff, gegebenenfalls durch Methyl substituiertes Benzyl oder gegebenenfalls durch Methyl substituiertes Phenyl,
- R⁷ und R⁸: unabhängig voneinander für Wasserstoff, C₁-C₄-Alkyl, C₁-C₄-Alkoxy oder C₁-C₈-Alkanoylamino,
- R¹⁰: für Wasserstoff, C₁-C₄-Alkyl, gegebenenfalls durch C₁-C₄-Alkyl oder C₁-C₄-Alkoxy substituiertes Phenyl, Benzyl oder Thienyl,
- R¹¹: für Cyano,
- R¹²: für Halogen, Wasserstoff, C₁-C₄-Alkyl, C₁-C₄-Alkoxy, C₁-C₄-Alkylthio, gegebenenfalls durch C₁-C₄-Alkyl substituiertes Phenyl oder Thienyl und
- n: für 0 stehen.

Hervorzuheben sind Farbstoffmischungen, enthaltend als Pyridinfarbstoff einen Farbstoff der Formel Ia.

Bevorzugt sind Farbstoffmischungen, enthaltend einen oder mehrere blaue Dispersionsfarbstoffe aus der Klasse der Azo- oder Anthrachinonfarbstoffe.

Besonders bevorzugt sind Farbstoffmischungen, enthaltend einen oder mehrere blaue Dispersionfarbstoffe aus der Klasse der 1,8-Dihydroxy-4,5-diaminoanthrachinone, 1,5-Dihydroxy-4,8-diaminoanthrachinone, 1,4-Diaminoanthrachinondicarbonsäureimide, 1,4-Diaminoanthrachinondicarbonsäureiminoimide, Thienylazofarbstoffe, Benzisothiazolazofarbstoffe oder Cyanophenylazofarbstoffe.

Geeignete 1,8-Dihydroxy-4,5-diaminoanthrachione oder 1,5-Dihydroxy-4,8-diaminoanthrachinone gehorchen z.B. der Formel IV 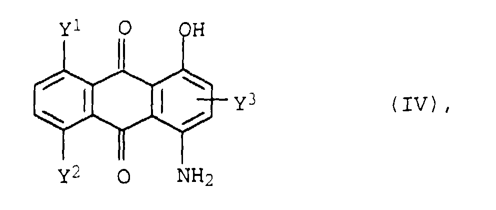 in der einer der beiden Reste Y¹ und Y² Hydroxy und der andere Amino und Y³ Methyl, Ethyl, 2-Hydroxyethyl, Hydroxyphenyl, C₁-C₄-Alkoxyphenyl, Acetyloxyphenyl, Chlor oder Brom bedeuten.

Geeignete 1,4-Diaminoanthrachinondicarbonsäureimide oder 1,4-Diaminoanthrachinondicarbonsäureiminoimide gehorchen z.B. der Formel V 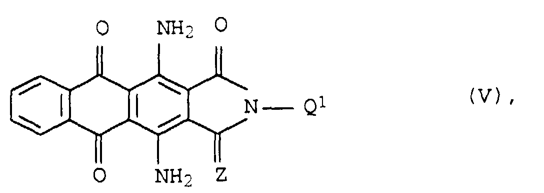 in der
- Q¹: C₁-C₁₀-Alkyl, das gegebenenfalls durch 1 oder 2 Sauerstoffatome in Etherfunktion unterbrochen ist und durch C₁-C₈-Alkoxycarbonyl, Hydroxy oder Phenyl substituiert sein kann, und
- Z: Sauerstoff oder Imino bedeuten,

Geeignete Thienylazofarbstoffe gehorchen z.B. der Formel VI 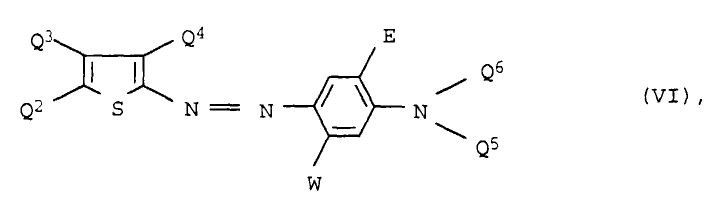 in der
- Q²: Formyl, Cyano oder Nitro,
- Q³: Wasserstoff, Chlor oder Brom,
- Q⁴: Cyano oder Acetyl,
- E: Wasserstoff oder C₁-C₄-Alkoxy,
- W: Wasserstoff, C₁-C₄-Alkyl, C₁-C₄-Alkoxy, gegebenenfalls durch Halogen, Cyano, Hydroxy, C₁-C₄-Alkoxy oder C₁-C₄-Alkanoyloxy substituiertes C₁-C₈-Alkanoylamino oder C₃-C₄-Alkenoylamino und
- Q⁵ und Q⁶: gleich oder verschieden sind und unabhängig voneinander jeweils Wasserstoff oder C₁-C₆-Alkyl, das gegebenenfalls durch Hydroxy, C₁-C₄-Alkoxy, C₁-C₄-Alkanoyloxy oder C₁-C₄-Alkoxycarbonyl substituiert ist, oder C₃-C₅-Alkenyl bedeuten.

Geeignete Benzisothiazolazofarbstoffe gehorchen z.B. der Formel VII 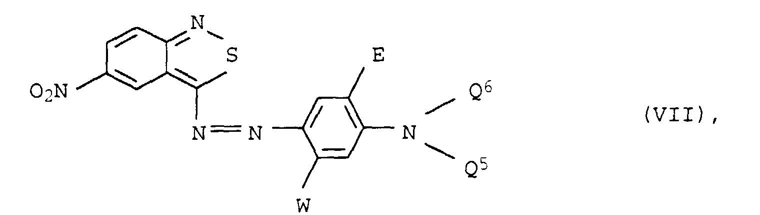 in der E, W, Q⁵ und Q⁶ jeweils die obengenannte Bedeutung besitzen.

Geeignete Cyanophenylazofarbstoffe gehorchen z.B. der Formel VIII 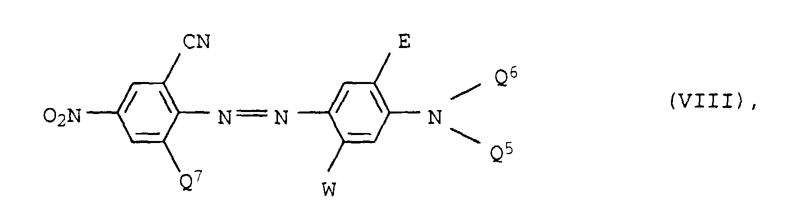 in der Q⁷ Cyano oder Nitro bedeutet und E, W, Q⁵ und Q⁶ jeweils die obengenannte Bedeutung besitzen.

Alle in den obengenannten Formeln V, VI, VII und VIII auftretenden Alkylgruppen können sowohl geradkettig als auch verzweigt sein.

Wenn die Alkylreste Substituenten tragen, so sind sie in der Regel 1- oder 2-fach substituiert.

Reste Q¹ sind z.B. Methyl, Ethyl, Propyl, Isopropyl, Butyl, Isobutyl, sec-Butyl, tert-Butyl, Pentyl, Isobutyl, Neopentyl, tert-Pentyl, Hexyl, 2-Methylpentyl, Heptyl, 2-Methylhexyl, Octyl, 2-Ethylhexyl, Nonyl, Decyl, 2-Methoxyethyl, 2-Ethoxyethyl, 2-Propoxyethyl, 2-Isoprooxyethyl, 2-Butoxyethyl, 2- oder 3-Methoxypropyl, 2- oder 3-Ethoxypropyl, 2- oder 3-Propoxypropyl, 2- oder 3-Isoprooxypropyl, 2- oder 3-Butoxypropyl, 2- oder 4-Methoxybutyl, 2- oder Ethoxybutyl, 3,6-Dioxaheptyl, 3,6-Dioxaoctyl, 4,7-Dioxaoctyl, 4,7-Dioxanonyl, 2-Hydroxyethyl, 2- oder 3-Hydroxypropyl, 2- oder 4-Hydroxybutyl, Benzyl, 1- oder 2-Phenylethyl, 3-Phenylpropyl oder 2,3-Diphenylpropyl.

Reste Q¹ sind, wie auch die Reste Q⁵ und Q⁶, weiterhin z.B. 2-Methoxycarbonylethyl, 2-Ethoxycarbonylethyl, 2-Propoxycarbonylethyl, 2-Isopropoxycarbonylethyl, 2-Butoxycarbonylethyl, 2- oder 3-Methoxycarbonylpropyl, 2- oder 3-Ethoxycarbonylpropyl, 2- oder 3-Propoxycarbonylpropyl, 2- oder 3-Isopropoxycarbonylpropyl, 2- oder 3-Butoxycarbonylpropyl, 2- oder 4-Methoxycarbonylbutyl oder 2- oder 4-Ethoxycarbonylbutyl.

Reste E und W sind z.B. Methoxy, Ethoxy, Propoxy, Isopropoxy, Butoxy, Isobutoxy oder sec-Butoxy.

Reste W, Q⁵ und Q⁶ sind weiterhin z.B. Methyl, Ethyl, Propyl, Isopropyl, Butyl, Isobutyl oder sec-Butyl.

Reste W sind weiterhin z.B. Acetylamino, Propionylamino, Butyrylamino, Isobutyrylamino, 2-Ethylhexanoylamino, Methoxyacetylamino, Ethoxyacetylamino, 2- oder 3-Methoxypropionylamino, Chloracetylamino, Cyanoacetylamino, Hydroxyacetylamino, Acetyloxyacetylamino, Acroylamino oder Methacroylamino.

Reste Q⁵ und Q⁶ sind weiterhin z.B. Pentyl, Isopentyl, Neopentyl, Hexyl, 2-Hydroxyethyl, 2- oder 3-Hydroxypropyl, 2- oder 4-Hydroxybutyl, 2-Methoxyethyl, 2-Ethoxyethyl, 2- oder 3-Methoxypropyl, 2- oder 3-Ethoxypropyl, 2- oder 4-Methoxybutyl, 2- oder 4-Ethoxybutyl, 2-Acetyloxyethyl, 2- oder 3-Acetyloxypropyl, Allyl oder Methallyl.

Hervorzuheben sind solche Farbstoffmischungen, die einen oder mehrere Farbstoffe der Formel V, in der
- Q¹: C₁-C₈-Alkyl, oder insbesondere C₁-C₈-Alkyl, das durch 1 oder 2 Sauerstoffatome in Etherfunktion unterbrochen ist, und
- Z: Sauerstoff bedeuten, enthalten.

Hervorzuheben sind weiterhin solche Farbstoffmischungen, die einen oder mehrere Farbstoffe der Formel VI, in der
- Q²: Formyl oder Cyano,
- Q⁴: Cyano,
- Q³: Chlor,
- E: Wasserstoff,
- W: C₁-C₄-Alkyl oder gegebenenfalls durch Methoxy oder Ethoxy substiutiertes Acetylamino oder Propionylamino und
- Q⁵ und Q⁶: unabhängig voneinander jeweils C₁-C₄-Alkyl, das gegebenenfalls durch Hydroxy oder C₁-C₄-Alkoxy substituiert ist, bedeuten, enthalten.

Die erfindungsgemäßen Farbstoffmischungen enthalten in der Regel 5 bis 60 Gew.-%, vorzugsweise 30 bis 60 Gew.-% und insbesondere 40 bis 50 Gew.-%, jeweils bezogen auf das Gewicht der Mischung, eines oder mehrerer Pyridinfarbstoffe der Formel Ia oder Ib sowie 40 bis 95 Gew.-%, vorzugsweise 40 bis 70 Gew.-% und insbesondere 50 bis 60 Gew.-%, jeweils bezogen auf das Gewicht der Mischung eines oder mehrerer blauer Anthrachinonfarbstoffe, vorzugsweise solche aus der Klasse der 1,8 -Dihydroxy-4,5-diaminoanthrachinone, 1,5-Dihydroxy-4,8-diaminoanthrachinone, 1,4-Diaminoanthrachinondicarbonsäureimide oder 1,4-Diaminoanthrachinondicarbonsäureiminoimide, insbesondere solche der Formel IV oder V.

Im Falle von Azofarbstoffen, enthalten die erfindungsgemäßen Farbstoffmischungen in der Regel 20 bis 80 Gew.-%, vorzugsweise 35 bis 80 Gew.-% und insbesondere 50 bis 80 Gew.-%, jeweils bezogen auf das Gewicht der Mischung, eines oder mehrerer Pyridinfarbstoffe der Formel Ia oder Ib sowie 20 bis 80 Gew.-%, vorzugsweise 20 bis 65 Gew.-% und insbesondere 20 bis 50 Gew.-%, jeweils bezogen auf das Gewicht der Mischung eines oder mehrerer blauer Azofarbstoffe, vorzugsweise solche aus der Klasse der Thienylazofarbstoffe, Benzisothiazolazofarbstoffe oder Dicyanophenylazofarbstoffe, insbesondere solche der Formel VI, VII oder VIII, wobei Thienylazofarbstoffe, insbesondere solche der Formel VI besonders hervorzuheben sind.

Auch Mischungen, die neben 30 bis 50 Gew.-%, bezogen auf das Gewicht der Mischung, eines oder mehrerer Pyridinfarbstoffe der Formel Ia oder Ib, 50 bis 70 Gew.-%, bezogen auf das Gewicht der Mischung, eines oder mehrerer blauen Anthrachinonfarbstoffe sowie eines oder mehrerer blauer Azofarbstoffe aufweisen, sind möglich.

Bei den Farbstoffen der Formeln IV, V, VI, VII und VIII handelt es sich im allgemeinen um bekannte Farbstoffe. Farbstoffe der Formel IV sind z.B. aus Ullmann's Encyclopedia of Industrial Chemistry, 5th Ed, Vol. A2, Seiten 399 bis 401, bekannt. Farbstoffe der Formel V sind z.B. in der US-A-2 628 963, US-A-3 835 154, DE-B-1 266 425 oder DE-A-2 016 794 beschrieben. Farbstoffe der Formel VI sind z.B. aus der EP-A-201 896 bekannt. Farbstoffe der Formel VII sind z.B. in der US-A-4 465 628, US-A-4 722 737 oder US-A-4 773 915 beschrieben. Farbstoffe der Formel VIII sind z.B. aus der DE-A-1 544 563 bekannt.

Die Herstellung der erfindungsgemäßen Farbstoffmischungen erfolgt auf an sich bekanntem Weg, z.B. durch Mischen der jeweiligen Partner im genannten Gewichtsverhältnis. Gegebenenfalls können den neuen Mischungen weitere Komponenten, z.B. Dispergiermittel, wie Ligninsulfonate oder Sulfonierungsprodukte des Reaktionsproduktes von Formaldehyd mit Aromaten, Verdickungsmittel oder andere Hilfsmittel, zugesetzt werden. Es ist auch möglich, bereits fertige Farbstoffpräparationen der jeweiligen Partner oder fertige Farbstoffpräparationen mit reinen Farbstoffen abzumischen.

Die erfindungsgemäßen Farbstoffmischungen können, ebenso wie die Pyridinfarbstoffe der Formel Ia oder Ib, vorteilhaft in Form einer Farbstoffzubereitung zur Anwendung gelangen. Solche Farbstoffzubereitungen enthalten in der Regel 15 bis 60 Gew.-%, bezogen auf das Gewicht der Farbstoffzubereitung, einer eingangs näher bezeichneten erfindungsgemäßen Farbstoffmischung oder einen oder mehrere Pyridinfarbstoffe der Formel Ia oder Ib sowie 40 bis 85 Gew.-%, bezogen auf das Gewicht der Farbstoffzubereitung, Dispergiermittel und gegebenenfalls weitere Hilfsmittel.

Die erfindungsgemäßen Farbstoffmischungen eignen sich, ebenso wie die Pyridinfarbstoffe der Formel I oder Ib, vorteilhaft zum Färben oder Bedrucken, insbesondere zum Färben oder Direktbedrucken, von Synthesefasern, Celluloseestern oder deren Mischungen.

Synthesefasern im erfindungsgemäßen Sinn sind insbesondere Polyester oder Polyamid, beispielsweise in Form von Fasern, Gewebe oder auch Mischgewebe von Polyestern mit Baumwolle, Wolle, Celluloseacetat oder Triacetat. Celluloseester im erfindungsgemäßen Sinn sind insbesondere Celluosetriacetat oder Celluloseacetat. Man erhält Ausfärbungen oder Drucke in blauen Farbtönen.

Die Färbe- und Druckverfahren sind an sich bekannt. Im Gegensatz zum textilen Transferdruckverfahren, bei dem der Farbstoff durch Sublimation von einem Träger auf das zu bedruckende Gut aufgebracht wird, wird beim Direktdruckverfahren die die Farbstoffmischung enthaltende Druckpaste direkt auf das zu bedruckende Gut aufgedruckt.

Die erfindungsgemäßen Farbstoffmischungen verfügen gleichzeitig über hohe Brillanz, hohe Lichtechtheit und hohe Farbstärke und weisen dazu noch ein gutes Aufziehverhalten auf.

Die erfindungsgemäß zur Anwendung kommenden Pyridinfarbstoffe der Formel Ia oder Ib zeigen gute färberische Eigenschaften und weisen eine gute Kombinierbarkeit auf.

Die vorliegende Erfindung betrifft weiterhin Triazolopyridinfarbstoffe der Formel II 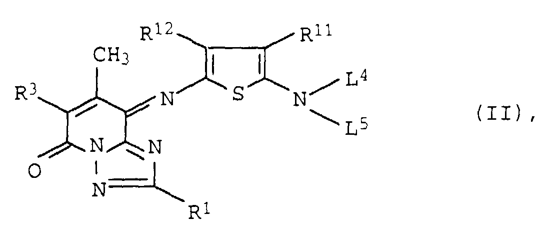 in der
- R¹: C₁-C₂₀-Alkyl, das gegebenenfalls substituiert ist und durch ein oder mehrere Sauerstoffatome in Etherfunktion unterbrochen sein kann, gegebenenfalls substituiertes Phenyl oder Hydroxy,
- R³: Cyano, Carbamoyl, Carboxyl oder C₁-C₄-Alkoxycarbonyl,
- R¹¹: Cyano, Carbamoyl, C₁-C₈-Mono- oder Dialkylcarbamoyl oder gegebenenfalls substituiertes Phenyl,
- R¹²: Halogen, Wasserstoff, C₁-C₄-Alkyl, C₁-C₄-Alkoxy, C₁-C₄-Alkylthio, gegebenenfalls durch C₁-C₄-Alkyl oder C₁-C₄-Alkoxy substituiertes Phenyl oder Thienyl und
- L⁴ und L⁵: gleich oder verschieden sind und unabhängig voneinander jeweils Wasserstoff oder mit Ausnahme von Hydroxy und den obengenannten Rest R¹ bedeuten,
wobei der Farbstoff der Formel 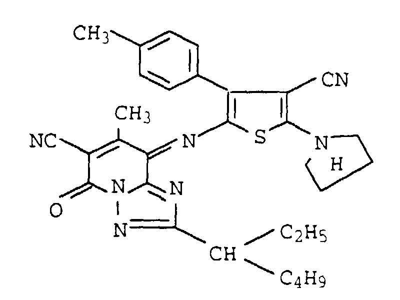 ausgenommen ist.

Der oben ausgeschlossene Farbstoff ist in der EP-A-569 784 beschrieben.

Die neuen Triazolopyridinfarbstoffe der Formel II können nach an sich bekannten Methoden, wie sie z.B. in der US-A-5 079 365 beschrieben sind, erhalten werden.

Beispielsweise kann man eine Nitrosothienylverbindung der Formel IX 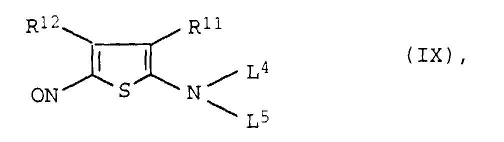 in der R¹¹, R¹², L⁴ und L⁵ jeweils die obengenannte Bedeutung besitzen, mit einem Triazolopyridin der Formel X 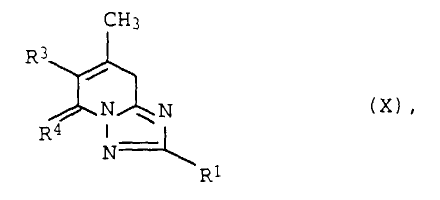 in der R¹, R³ und R⁴ jeweils die obengenannte Bedeutung besitzen, kondensieren.

Wie oben bereits ausgeführt, eignen sich die neuen Triazolopyridinfarbstoffe der Formel II vorteilhaft zum Färben oder Bedrucken von Synthesefasern, Celluloseestern oder deren Mischungen, zur Herstellung der erfindungsgemäßen Farbstoffmischungen sowie für den Thermodiffusionstransfer gemäß der US-A-5 079 365.

Die folgenden Beispiele sollen die Erfindung näher erläutern.

### Färbevorschrift

5 g Polyestergewebe werden bei Raumtemperatur in 100 ml einer Färbeflotte gegeben, die 0,5 Gew.-%, bezogen auf das Polyestergewebe, einer Farbstoffmischung oder eines Einzelfarbstoffs und 0,2 g eines Dispergiermittels auf Basis eines Kondensationsprodukts von Formaldehyd mit aromatischen Sulfonsäuren enthält und deren pH-Wert mittels Essigsäure/Natriumacetat auf 4,5 eingestellt ist. Die Temperatur der Flotte wird innerhalb von 30 Minuten auf 130°C gesteigert, 60 Minuten bei dieser Temperatur gehalten und dann innerhalb von 20 Minuten auf 70°C erniedrigt.

Danach wird das ausgefärbte Polyestergewebe reduktiv gereinigt, indem man es 15 Minuten in 200 ml einer Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 70°C behandelt. Schließlich wird das Gewebe gespült, mit verdünnter Essigsäure neutralisiert, nochmals gespült und getrocknet.

Als Farbstoffe kamen dabei folgende Produkte zur Anwendung:

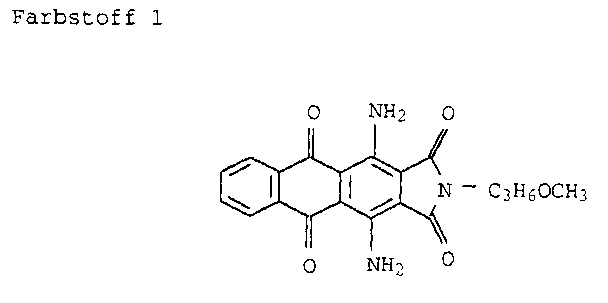

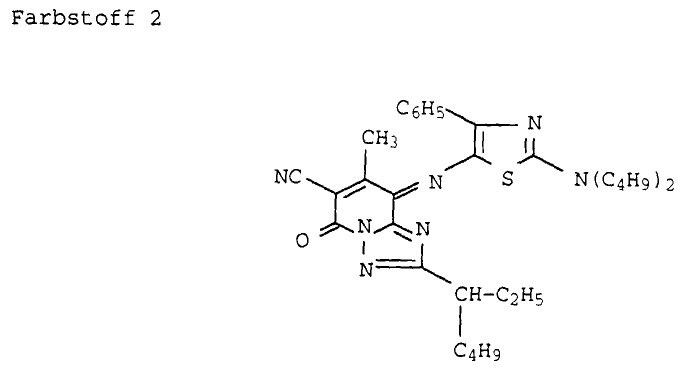

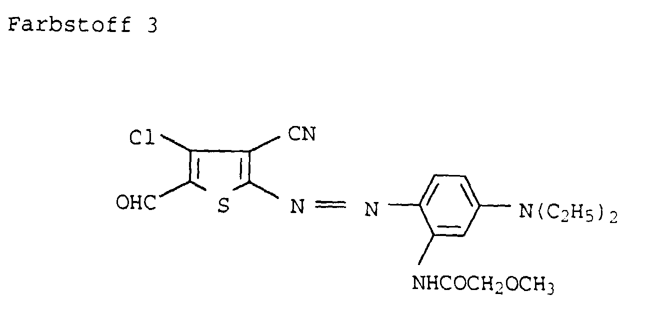

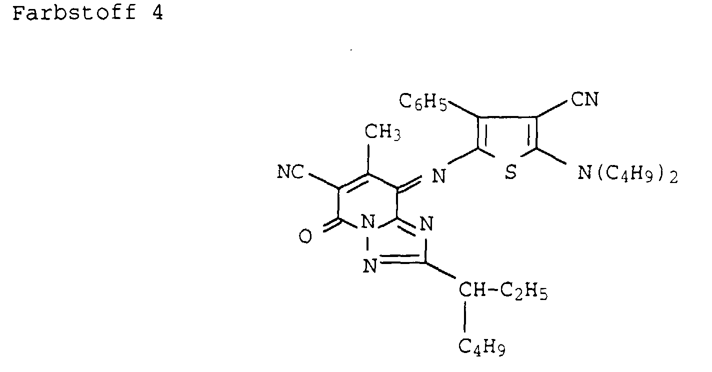

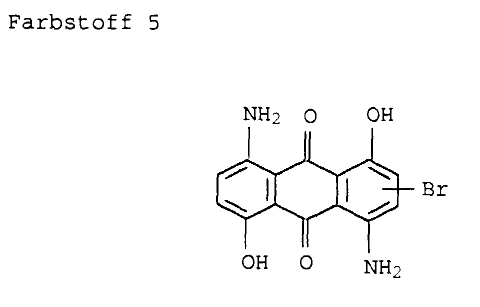

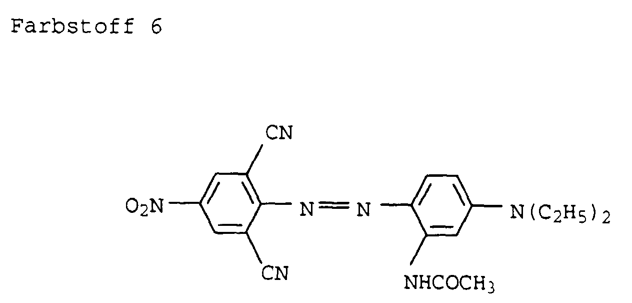

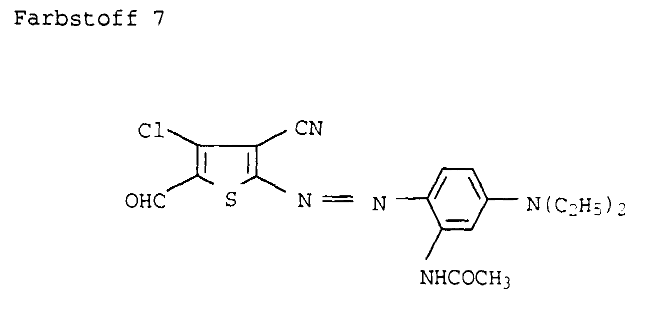

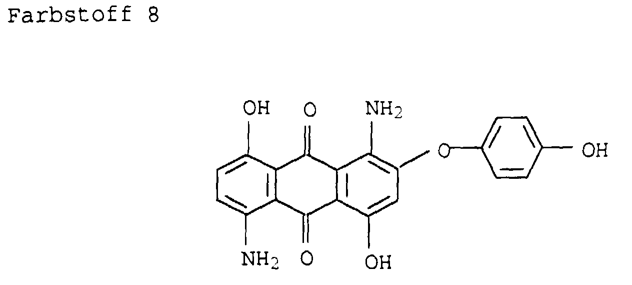

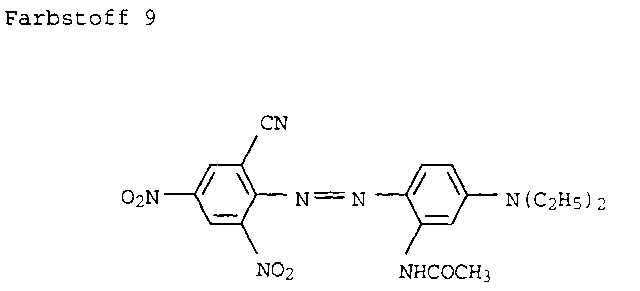

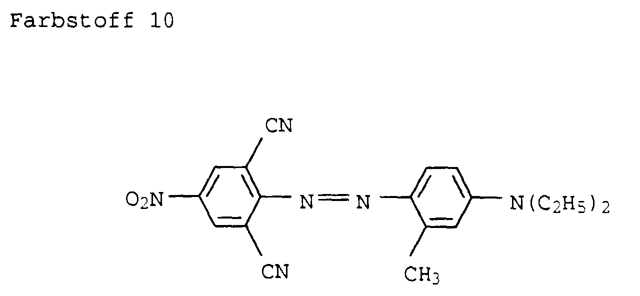

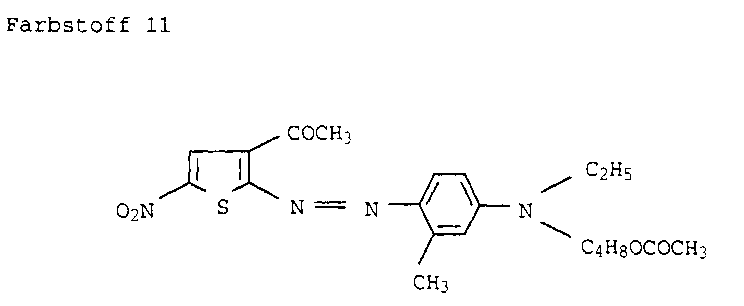

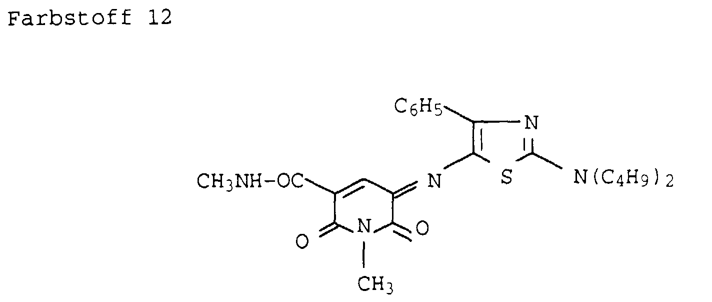

Die in der folgenden Tabelle aufgeführten Mischungen wurden entsprechend obiger Vorschrift zur Herstellung von Ausfärbungen verwendet.

| Bsp. Nr. | Farbstoff Nr. [Gew.-%, bezogen auf die Farbstoffmischung] | | | | | |
|---|---|---|---|---|---|---|
| 1 | 1 | 0,264 | 2 | 0,102 | | |
| 2 | 3 | 0,043 | 2 | 0,102 | | |
| 3 | 3 | 0,054 | 4 | 0,110 | | |
| 4 | 1 | 0,264 | 4 | 0,132 | | |
| 5 | 1 | 0,198 | 2 | 0,102 | 3 | 0,011 |
| 6 | 5 | 0,120 | 2 | 0,102 | | |
| 7 | 5 | 0,120 | 4 | 0,132 | | |
| 8 | 6 | 0,063 | 4 | 0,110 | | |
| 9 | 6 | 0,075 | 2 | 0,068 | | |
| 10 | 7 | 0,060 | 4 | 0,110 | | |
| 11 | 7 | 0,072 | 2 | 0,068 | | |
| 12 | 12 | 0,084 | 1 | 0,264 | | |
| 13 | 12 | 0,084 | 5 | 0,120 | | |

Die Farbstoffmischungen ergeben auf Polyester blaue Färbungen mit hoher Brillanz und guten Gebrauchs- und Fabrikationseigenschaften.

Sehr gute Ergebnisse werden auch mit Mischungen erzielt, die einerseits den Farbstoff 8, 9, 10 und 11 und andererseits den Farbstoff 2, 4 oder 12 enthalten.

Als Azofarbstoff für die Herstellung von Farbstoffmischungen ist auch der Farbstoff der Formel 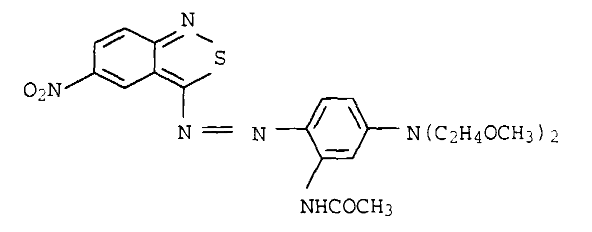 vorteilhaft geeignet.

### Beispiel 14

8,35 g 2-N,N-Dibutylamino-3-cyano-4-phenylthiophen wurden in eine Mischung aus 100 ml Wasser, 50 ml konz. Salzsäure, 150 ml Essigsäure und 200 ml Ethylacetat gegeben. Es wurde auf 0 bis 5°C gekühlt, und zur Mischung wurden dann 10 ml 23 gew.-%ige wäßrige Natriumnitritlösung getropft. Nach einstündigem Rühren bei 0 bis 5°C wurde durch Zugabe von 25 gew.-%igem wäßrigem Ammoniak ein pH-Wert von 7 eingestellt und die resultierende Nitrosoverbindung durch Ausschütteln mit 200 ml Ethylacetat extrahiert.

Dieser Extrakt wurde zu einer Aufschlämmung von 6,8 g der Verbindung der Formel 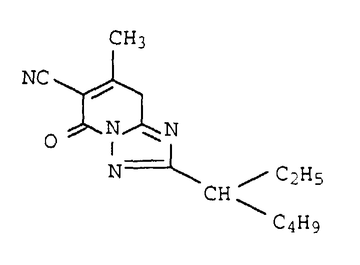 in 20 ml Acetanhydrid gegeben. Daraufhin wurde solange Ethylacetat abdestilliert bis die Innentemperatur 100°C betrug. Das Reaktionsgemisch ruhte 12 Stunden bei Raumtemperatur und der als Niederschlag resultierende Farbstoff der Formel 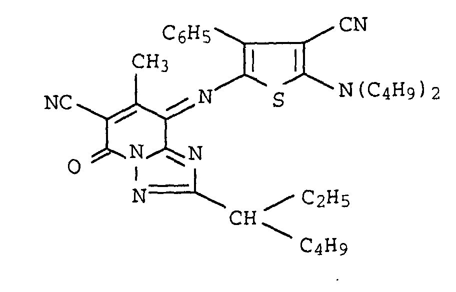 wurde abgesaugt, mit Wasser und Methanol gewaschen und bei 75°C unter vermindertem Druck getrocknet. Ausbeute: 10,95 g (73,6 % d. Th.).

In analoger Weise können folgende Verbindungen der Formel 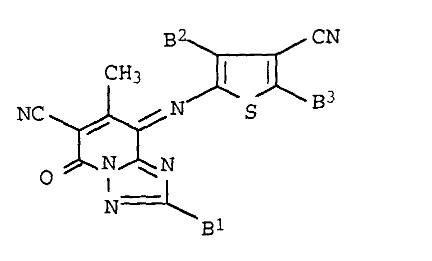 erhalten werden.

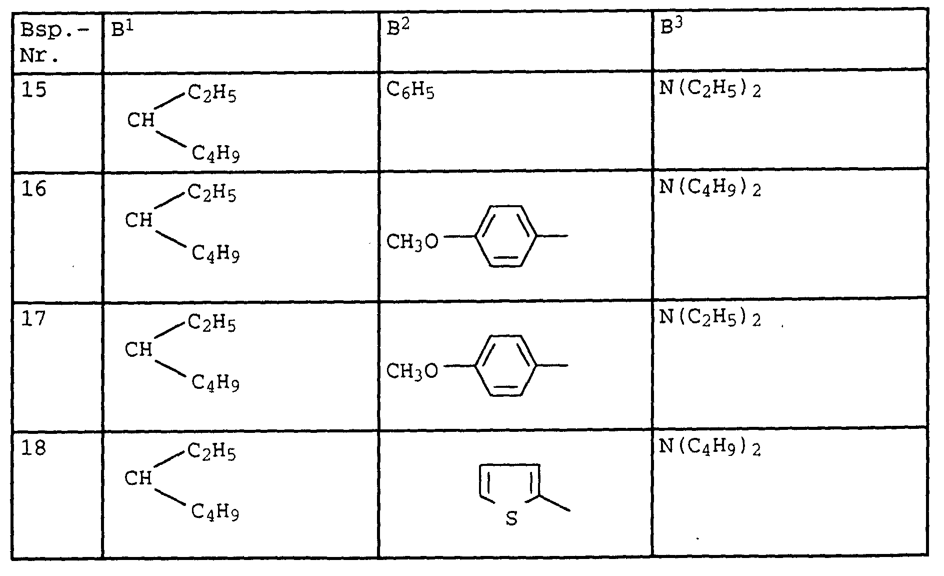

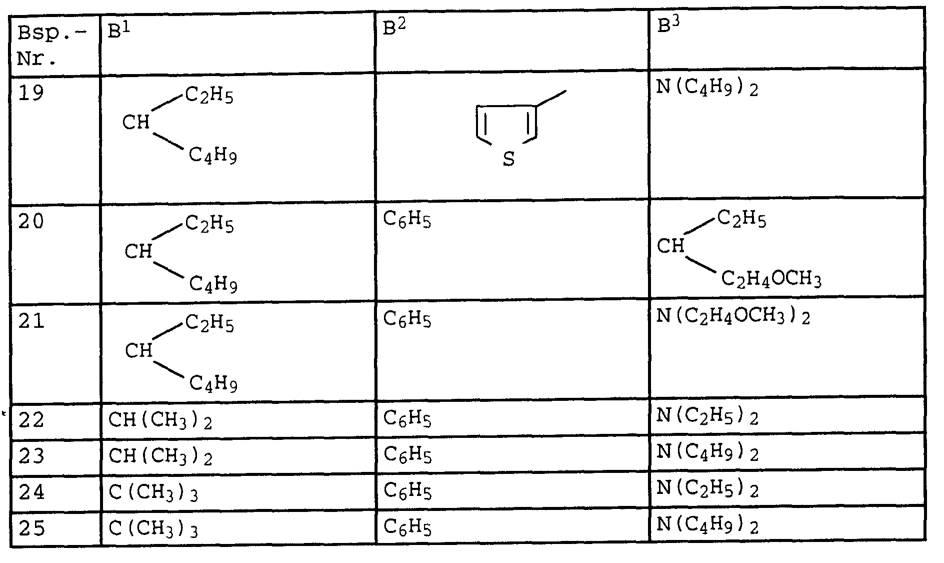

## Patentansprüche

1. Farbstoffmischungen, enthaltend einen oder mehrere Pyridinfarbstoffe der Formel Ia oder Ib 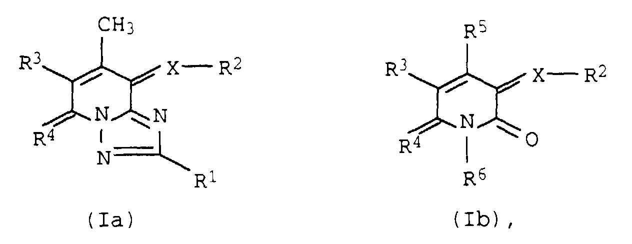 worin
R¹ C₁-C₂₀-Alkyl, das gegebenenfalls substituiert ist und durch ein oder mehrere Sauerstoffatome in Etherfunktion unterbrochen sein kann, gegebenenfalls substituiertes Phenyl oder Hydroxy,
R² einen 5- oder 6-gliedrigen carbocyclischen oder heterocyclischen Rest, der gegebenenfalls substituiert ist und benzoanelliert sein kann,
R³ Cyano, Carbamoyl, Carboxyl oder C₁-C₄-Alkoxycarbonyl,
R⁴ Sauerstoff oder einen Rest der Formel C(CN)₂, C(CN)COOL¹ oder C(COOL¹)₂, wobei L¹ jeweils für C₁-C₈-Alkyl, das gegebenenfalls durch 1 oder 2 Sauerstoffatome in Etherfunktion unterbrochen ist, steht,
R⁵ Wasserstoff oder C₁-C₄-Alkyl,
R⁶ C₁-C₂₀-Alkyl, das gegebenenfalls substituiert ist und durch ein oder mehrere Sauerstoffatome in Etherfunktion unterbrochen sein kann, gegebenenfalls substituiertes Phenyl, Hydroxy oder einen Rest der Formel NL²L³, wobei L² und L³ gleich oder verschieden sind und unabhängig voneinander jeweils für Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder L² und L³ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf-oder sechsgliedrigen gesättigten heterocyclischen Rest, der gegebenenfalls weitere Heteroatome enthält, stehen, und
X Stickstoff, oder, wenn R⁴ für einen Rest der Formel C(CN)₂, C(CN)COOL¹ oder C(COOL¹)₂ steht, auch CH bedeuten,
sowie einen oder mehrere blaue Dispersionsfarbstoffe aus der Klasse der Azo-, Methin- oder Anthrachinonfarbstoffe, deren Farbort nach CIELAB (gemäß ISO 7724-3-1984) im folgenden Bereich liegt: Hue: 240 bis 280 und Chroma: > 35, wobei Farbstoffmischungen, bestehend aus einem Pyridinfarbstoff der Formel Ia und einem Anthrachinonfarbstoff der Formel 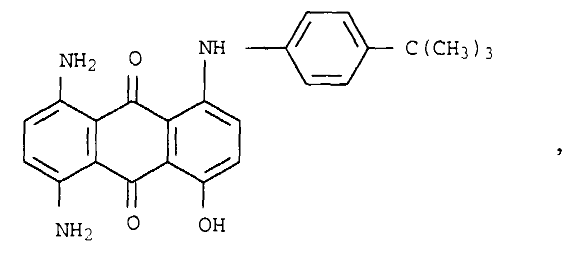 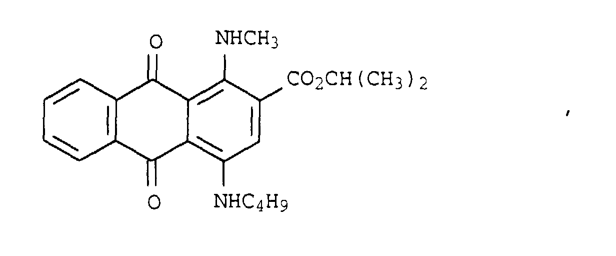 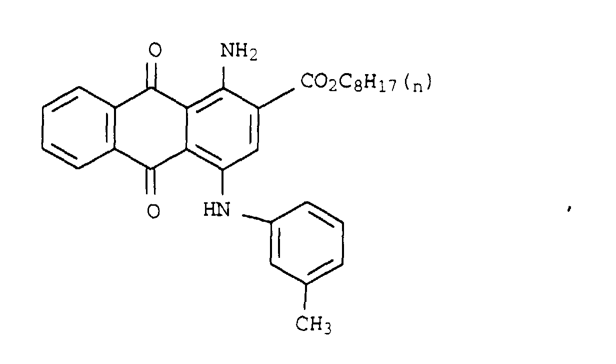 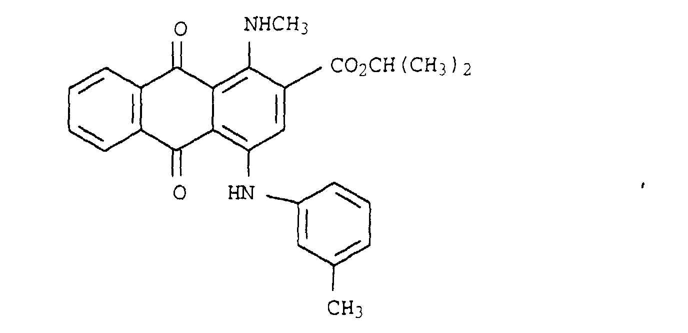 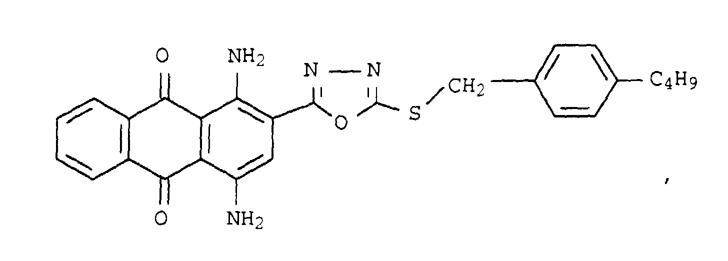 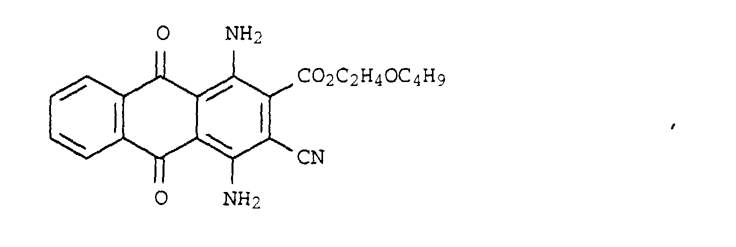 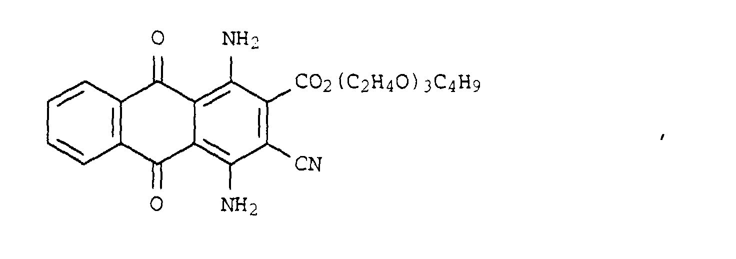 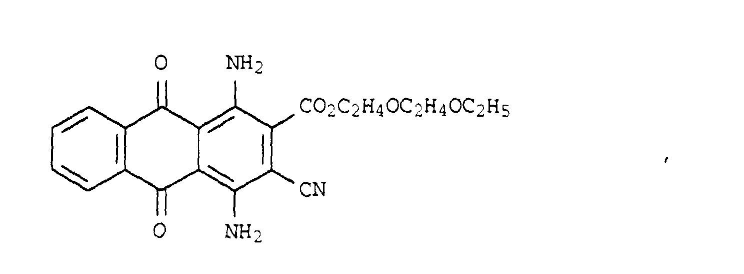 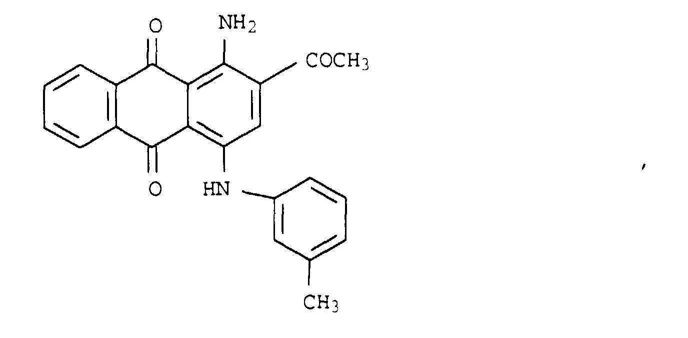 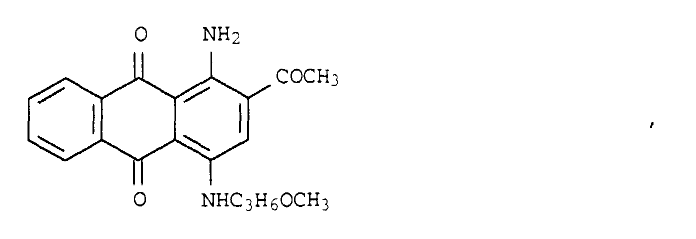 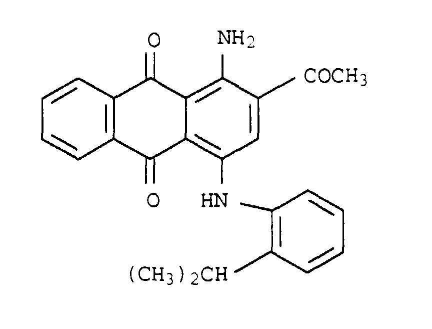 oder 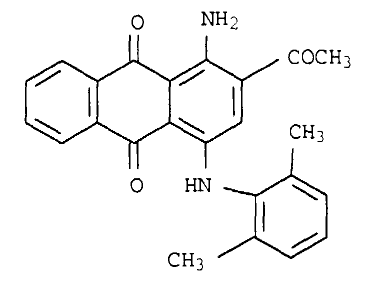 sowie Farbstoffmischungen, bestehend aus den Farbstoffen der Formel 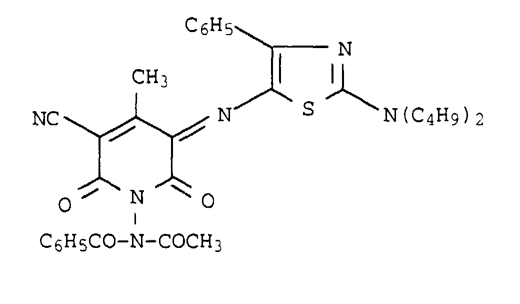 und 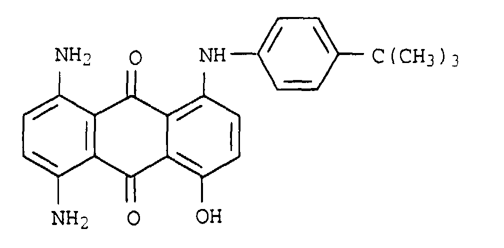 ausgenommen sind.

2. Farbstoffmischungen nach Anspruch 1, enthaltend einen oder mehrere Pyridinfarbstoffe der Formel Ia oder Ib, in der R³ Cyano bedeutet.

3. Farbstoffmischungen nach Anspruch 1, enthaltend einen oder mehrere Pyridinfarbstoffe der Formel Ia oder Ib, in der R² sich von einer Komponente aus der Benzol-, Indol-, Chinolin-, Naphthalin-, Pyrrol-, Thiazol-, Benzimidazol-, Benzthiazol-, Thiophen- oder Diaminopyridinreihe ableitet.

4. Farbstoffmischungen nach Anspruch 1, enthaltend einen oder mehrere blaue Dispersionsfarbstoffe aus der Klasse der Azo- oder Anthrachinonfarbstoffe.

5. Farbstoffmischungen nach Anspruch 1, enthaltend einen oder mehrere blaue Dispersionsfarbstoffe aus der Klasse der 1,8-Dihydroxy-4,5-diaminoanthrachinone, 1,5-Dihydroxy-4,8-diaminoanthrachinone, 1,4-Diaminoanthrachinondicarbonsäureimide, 1,4-Diaminoanthrachinondicarbonsäureiminoimide, Thienylazofarbstoffe, Benzisothiazolazofarbstoffe oder Cyanophenylazofarbstoffe.

6. Verwendung der Farbstoffmischungen gemäß Anspruch 1 zum Färben oder Bedrucken von Synthesefasern, Celluloseestern oder deren Mischungen.

7. Triazolopyridinfarbstoffe der Formel II 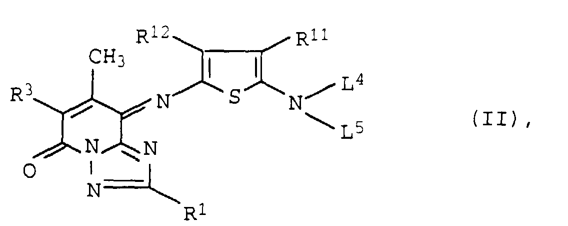 in der
R¹ C₁-C₂₀-Alkyl, das gegebenenfalls substituiert ist und durch ein oder mehrere Sauerstoffatome in Etherfunktion unterbrochen sein kann, gegebenenfalls substituiertes Phenyl oder Hydroxy,
R³ Cyano, Carbamoyl, Carboxyl oder C₁-C₄-Alkoxycarbonyl,
R¹¹ Cyano, Carbamoyl, C₁-C₈-Mono- oder Dialkylcarbamoyl oder gegebenenfalls substituiertes Phenyl,
R¹² Halogen, Wasserstoff, C₁-C₄-Alkyl, C₁-C₄-Alkoxy, C₁-C₄-Alkylthio, gegebenenfalls durch C₁-C₄-Alkyl oder C₁-C₄-Alkoxy substituiertes Phenyl oder Thienyl und
L⁴ und L⁵ gleich oder verschieden sind und unabhängig voneinander jeweils Wasserstoff oder mit Ausnahme von Hydroxy auch den obengenannten Rest R¹ bedeuten,
wobei der Farbstoff der Formel 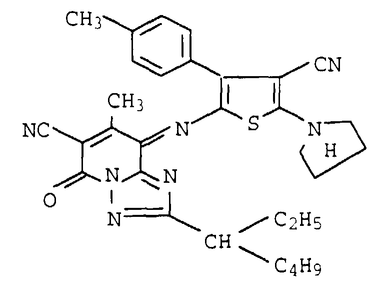 ausgenommen ist.

## Claims

1. Dye mixtures comprising one or more pyridine dyes of the formula Ia or Ib 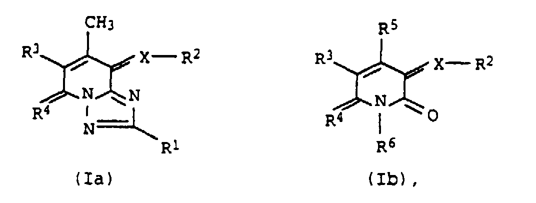 where
R¹ is C₁-C₂₀-alkyl, which may be substituted and may be interrupted by one or more oxygen atoms in ether function, substituted or unsubstituted phenyl, or hydroxyl,
R² is a 5- or 6-membered carbocyclic or heterocyclic radical which may be substituted and may be benzofused,
R³ is cyano, carbamoyl, carboxyl or C₁-C₄-alkoxycarbonyl,
R⁴ is oxygen or a radical of the formula C(CN)₂, C(CN)COOL¹ or C(COOL¹)₂, where L¹ is in either case C₁-C₈-alkyl, which may be interrupted by 1 or 2 oxygen atoms in ether function,
R⁵ is hydrogen or C₁-C₄-alkyl,
R⁶ is C₁-C₂₀-alkyl, which may be substituted and may be interrupted by one or more oxygen atoms in ether function, substituted or unsubstituted phenyl, hydroxyl or a radical of the formula NL²L³, where L² and L³ are identical or different and each is independently of the other hydrogen, substituted or unsubstituted C₁-C₁₂-alkyl, C₅-C₇-cycloalkyl, substituted or unsubstituted phenyl, substituted or unsubstituted pyridyl, substituted or unsubstituted C₁-C₁₂-alkanoyl, C₁-C₁₂-alkoxycarbonyl, substituted or unsubstituted C₁-C₁₂-alkylsulfonyl, C₅-C₇-cycloalkylsulfonyl, substituted or unsubstituted phenylsulfonyl, substituted or unsubstituted pyridylsulfonyl, substituted or unsubstituted benzoyl, pyridylcarbonyl or thienylcarbonyl, or L² and L³ are together with the nitrogen atom bonding them together unsubstituted or C₁-C₄-alkyl- substituted succinimido, unsubstituted or C₁-C₄-alkyl-substituted phthalimido or a five- or six-membered saturated heterocyclic radical which may contain further hetero atoms, and
X is nitrogen or else - when R⁴ is a radical of the formula C(CN)₂, C(CN)COOL¹ or C(COOL¹)₂ - CH,
and one or more blue disperse dyes of the class of the azo, methine or anthraquinone dyes whose color locus is under CIELAB (in accordance with ISO 7724-3-1984) within the following domain: hue: 240 - 280 and chroma: > 35, provided that dye mixtures consisting of a pyridine dye of the formula Ia and an anthraquinone dye of the formula 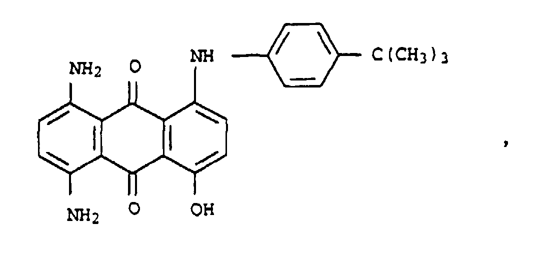 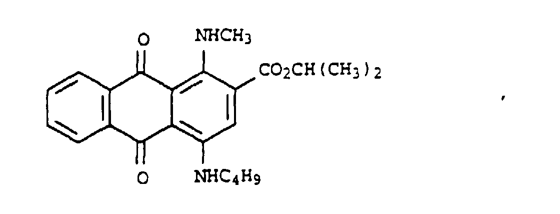 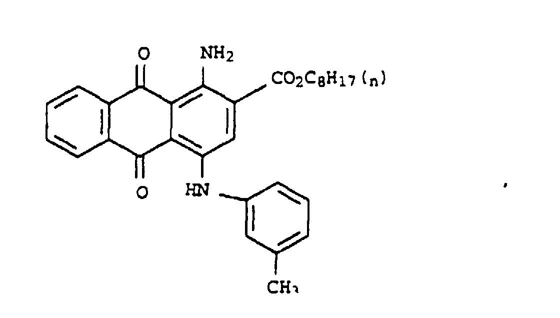 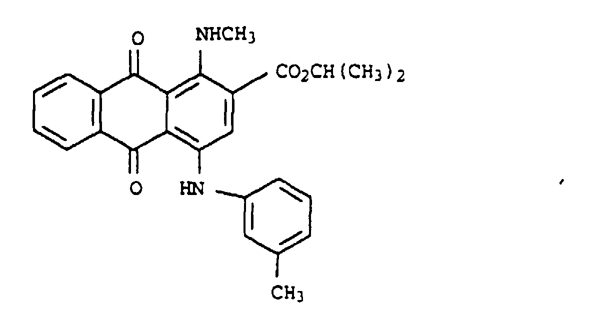 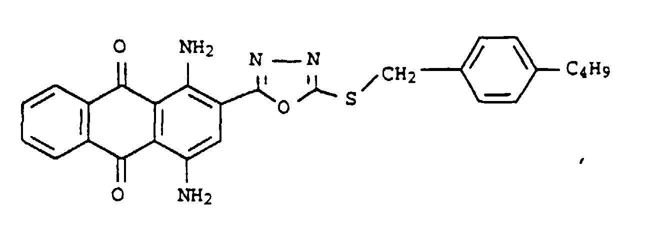 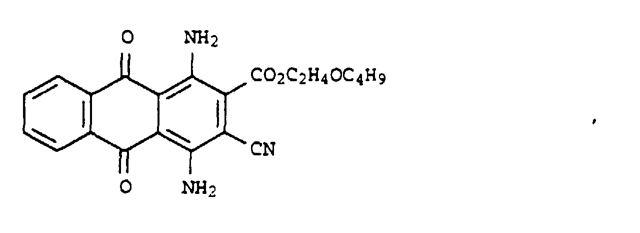 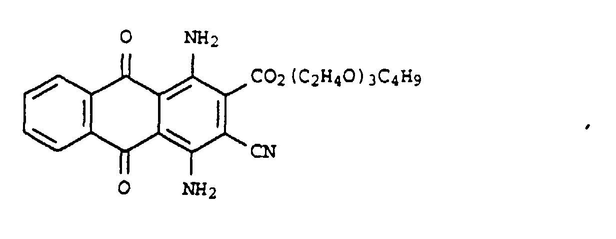 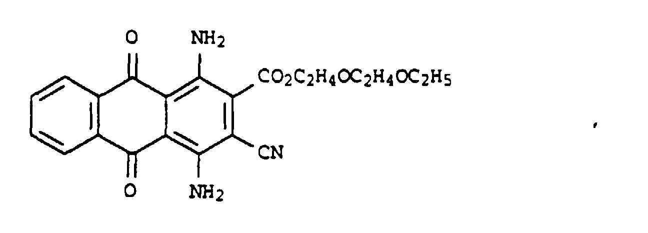 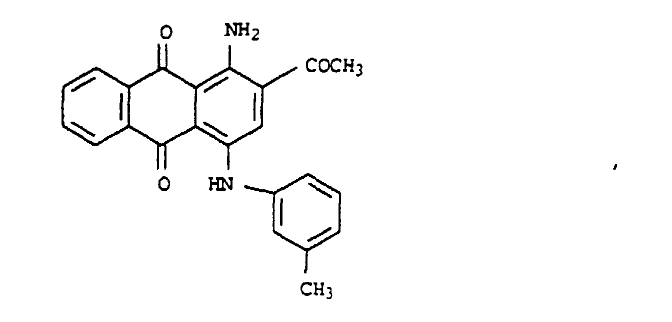 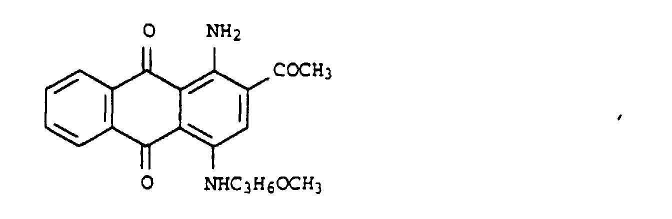 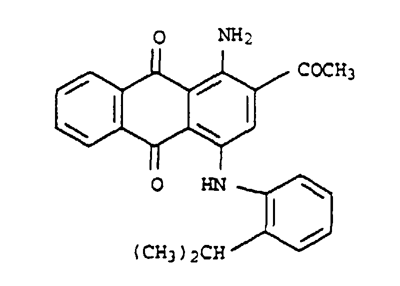 or 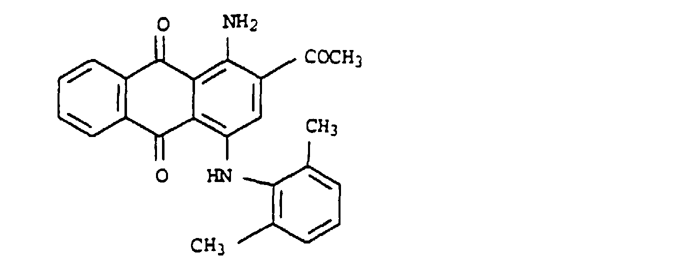 and dye mixtures consisting of the dyes of the formulae 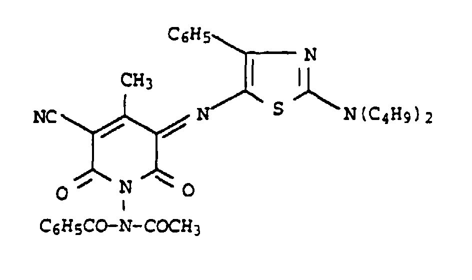 and 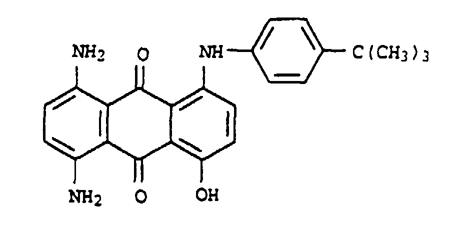 shall be excluded.

2. Dye mixtures as claimed in claim 1 comprising one or more pyridine dyes of the formula Ia or Ib where R³ is cyano.

3. Dye mixtures as claimed in claim 1 comprising one or more pyridine dyes of the formula Ia or Ib where R² is derived from a component of the benzene, indole, quinoline, naphthalene, pyrrole, thiazole, benzimidazole, benzothiazole, thiophene or diaminopyridine series.

4. Dye mixtures as claimed in claim 1 comprising one or more blue disperse dyes of the class of the azo or anthraquinone dyes.

5. Dye mixtures as claimed in claim 1 comprising one or more blue disperse dyes of the class of the 1,8-dihydroxy-4,5-diaminoanthraquinones, 1,5-dihydroxy-4,8-diaminoanthraquinones, 1,4-diaminoanthraquinonedicarboximides, 1,4-diaminoanthraquinonedicarboximinoimides, thienylazo dyes, benzisothiazolazo dyes or cyanophenylazo dyes.

6. The use of the dye mixtures of claim 1 for dyeing or printing synthetic fibers, cellulose esters or blends thereof.

7. Triazolopyridine dyes of the formula II 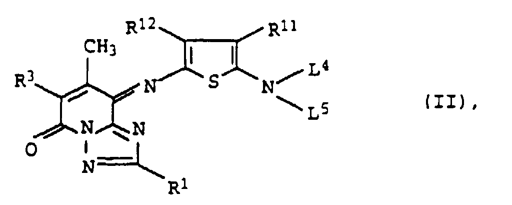 where
R¹ is C₁-C₂₀-alkyl, which may be substituted and may be interrupted by one or more oxygen atoms in ether function, substituted or unsubstituted phenyl, or hydroxyl,
R³ is cyano, carbamoyl, carboxyl or C₁-C₄-alkoxycarbonyl,
R¹¹ is cyano, carbamoyl, mono- or di(C₁-C₈-alkyl)carbamoyl or substituted or unsubstituted phenyl,
R¹² is halogen, hydrogen, C₁-C₄-alkyl, C₁-C₄-alkoxy, C₁-C₄-alkylthio, unsubstituted or C₁-C₄-alkyl- or C₁-C₄-alkoxy-substituted phenyl or thienyl, and
L⁴ and L⁵ are identical or different and each is independently of the other hydrogen or else, except for hydroxyl, the abovementioned radical R¹,
provided that the dye of the formula 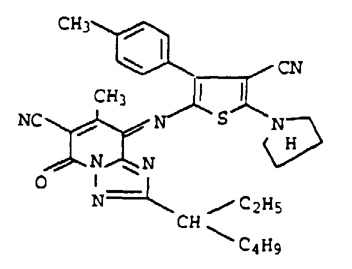 shall be excluded.

## Revendications

1. Mélanges de colorants, contenant un ou plusieurs colorants pyridiniques de formule la ou Ib 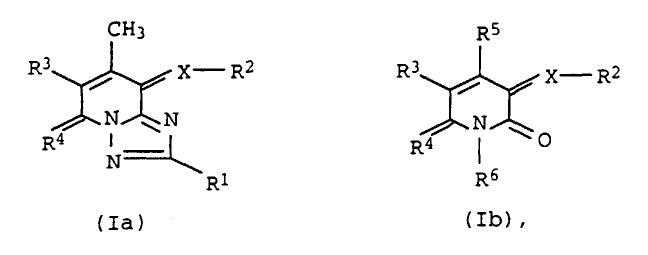 où
R¹ représente un groupement alkyle en C₁-C₂₀, éventuellement substitué et pouvant être interrompu par un ou plusieurs atomes d'oxygène en fonction éther, un groupement phényle éventuellement substitué ou hydroxy,
R² représente un reste carbocyclique ou hétérocyclique à 5 ou 6 maillons, éventuellement substitué et pouvant être benzocondensé,
R³ représente un groupement cyano, carbamoyle, carboxyle ou alcoxycarbonyle en C₁-C₄,
R⁴ représente un atome d'oxygène ou un reste de formule C(CN)₂, C(CN)COOL¹ ou C(COOL¹)₂, où L¹ est mis à chaque fois pour un groupement alkyle en C₁-C₈ éventuellement interrompu par un ou deux atomes d'oxygène en fonction éther,
R⁵ représente un atome d'hydrogène ou un groupement alkyle en C₁-C₄
R⁶ représente un groupement alkyle en C₁-C₂₀, éventuellement substitué et pouvant être interrompu par un ou plusieurs atomes d'oxygène en fonction éther, un groupement phényle éventuellement substitué, hydroxy, ou un reste de formule NL²L³, où L² et L³ sont identiques ou différents et représentent indépendamment les uns des autres un atome d'hydrogène, un groupement alkyle en C₁-C₁₂ éventuellement substitué, un groupement cycloalkyle en C₅-C₇, un groupement phényle éventuellement substitué, un groupement pyridyle éventuellement substitué, un groupement alcanoyle en C₁-C₁₂ éventuellement substitué, un groupement alcoxycarbonyle en C₁-C₁₂, un groupement alkylsulfonyle en C₁-C₁₂ éventuellement substitué, un groupement cycloalkylsulfonyle en C₅-C₇, un groupement phénylsulfonyle éventuellement substitué, un groupement pyridylsulfonyle éventuellement substitué, un groupement benzoyle éventuellement substitué, pyridylcarbonyle ou thiénylcarbonyle ou bien L² et L³ représentent ensemble, avec l'atome d'azote qui les relient, un groupement succinimido éventuellement substitué par un groupement alkyle en C₁-C₄, un groupement phtalimido éventuellement substitué par un groupement alkyle en C₁-C₄ ou un reste hétérocyclique saturé à 5 ou 6 maillons, contenant éventuellement d'autres hétéroatomes, et
X représente un atome d'azote, ou CH, lorsque R⁴ est mis pour un reste de formule C(CN)₂, C(CN)COOL¹ ou C(COOL¹)₂,
ainsi qu'un ou plusieurs colorants de dispersion bleus de la classe des colorants azoïques, méthiniques ou anthraquinoniques, dont l'indice colorimétrique d'après CIELAB (selon ISO 7724-3-1984) se trouve dans le domaine suivant : Hue : 240 à 280 et chroma : > 35, où les mélanges de colorants, constitués d'un colorant pyridinique de formule la et d'un colorant anthraquinonique de formule 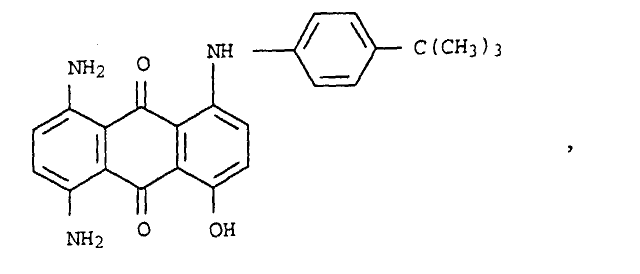 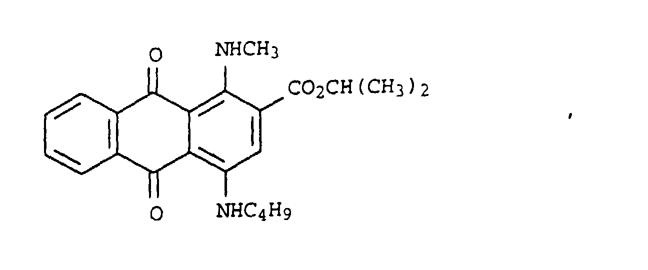 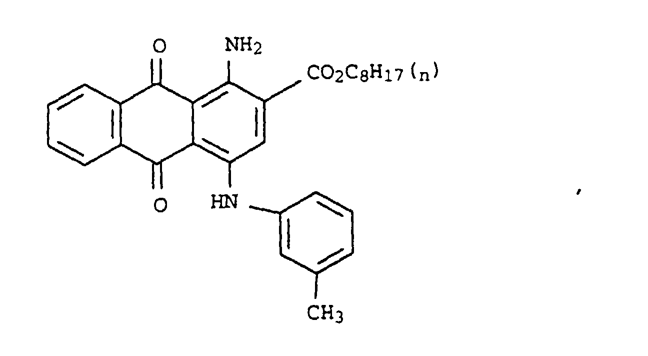 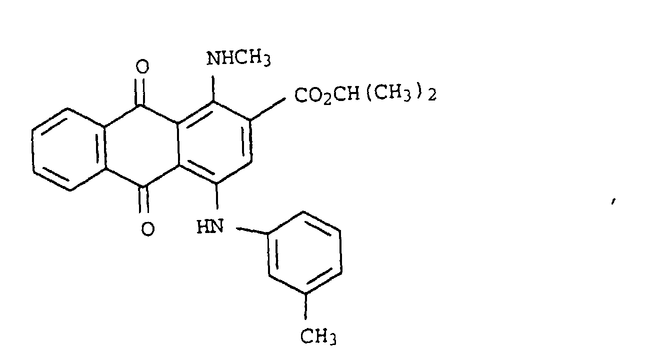 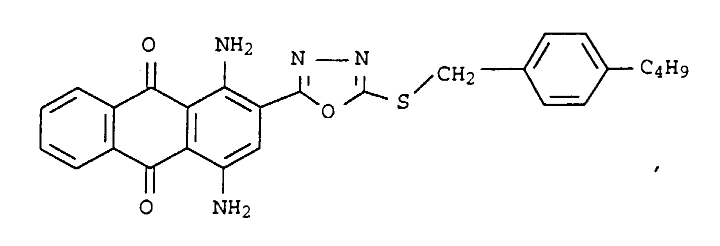 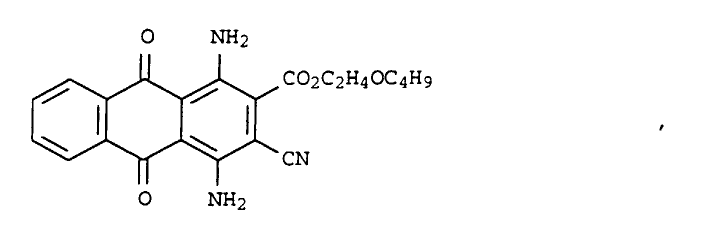 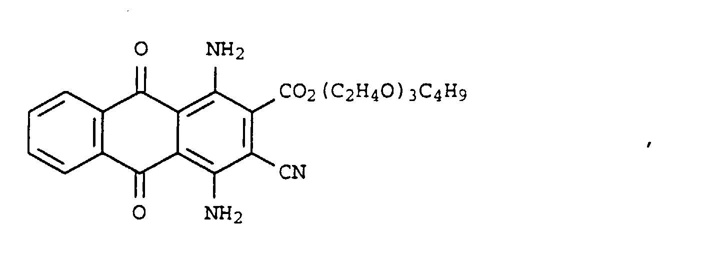 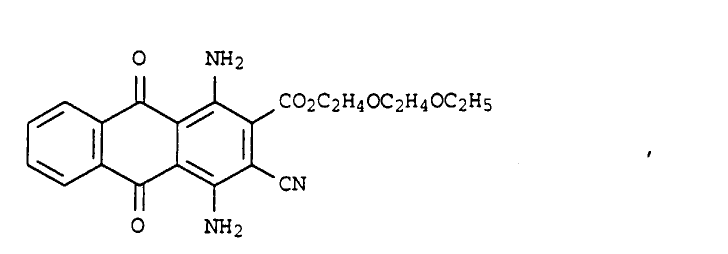 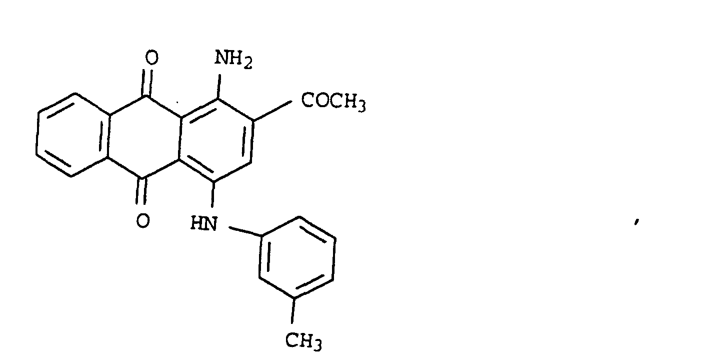 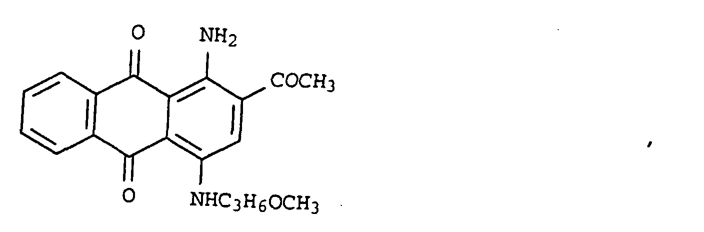 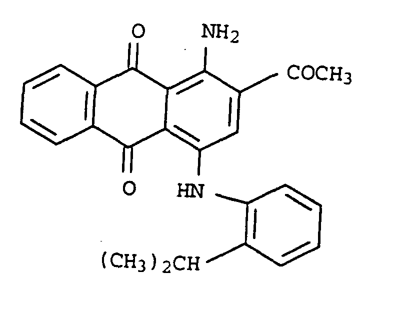 ou 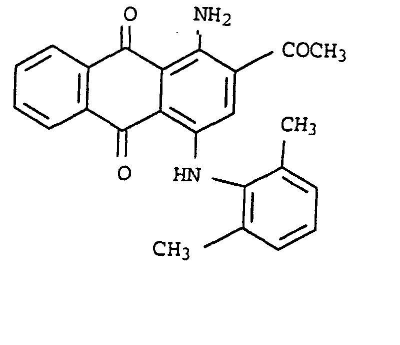 ainsi que les mélanges de colorants, constitués des colorants de formule 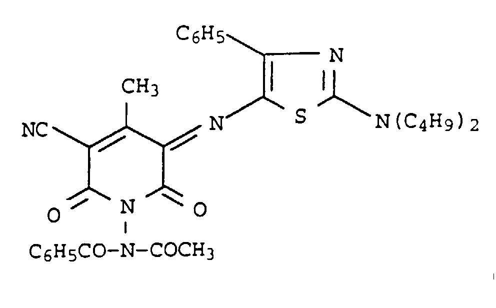 et 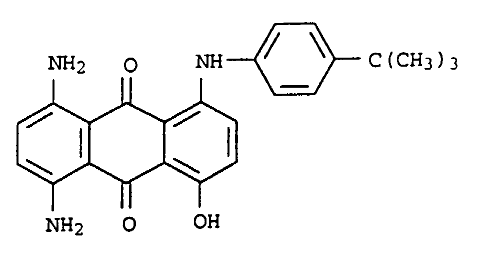 sont exclus.

2. Mélanges de colorants selon la revendication 1, contenant un ou plusieurs colorants pyridiniques de formule la ou Ib, dans lesquels R³ représente un groupement cyano.

3. Mélanges de colorants selon la revendication 1, contenant un ou plusieurs colorants pyridiniques de formule la ou Ib, dans lesquels R² dérive d'un composant de la série du benzène, de l'indole, de la quinoléine, du naphtalène, du pyrrole, du thiazole, du benzimidazole, du benzothiazole, du thiophène ou de la diaminopyridine.

4. Mélanges de colorants selon la revendication 1, contenant un ou plusieurs colorants de dispersion bleus de la classe des colorants azoïques ou anthraquinoniques.

5. Mélanges de colorants selon la revendication 1, contenant un ou plusieurs colorants de dispersion bleus de la classe des 1,8-dihydroxy-4,5-diaminoanthraquinone, 1,5-dihydroxy-4, 8-diaminoanthraquinone, 1,4-diaminoanthraquinonedicarboximide, 1 ,4-diaminoanthraquinonedicarboximinoimide, des colorants thiénylazoïques, des colorants benzisothiazolazoïques ou des colorants cyanophénylazoïques.

6. Utilisation du mélange de colorants selon la revendication 1 pour la coloration ou l'impression de fibres synthétiques, d'esters de cellulose ou de leurs mélanges.

7. Colorants triazolopyridiniques de formule II 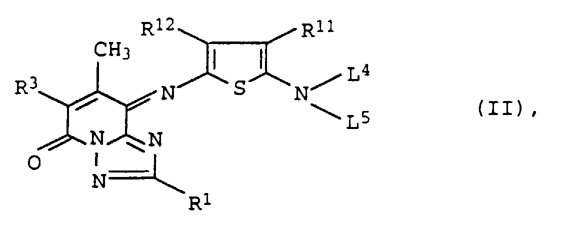 dans laquelle
R¹ représente un groupement alkyle en C₁-C₂₀, éventuellement substitué et pouvant être interrompu par un ou plusieurs atomes d'oxygène en fonction éther, un groupement phényle éventuellement substitué ou hydroxy,
R³ représente un groupement cyano, carbamoyle, carboxyle ou alcoxycarbonyle en C₁-C₄,
R¹¹ représente un groupement cyano, carbamoyle, mono- ou di(alkyle en C₁-C₈)carbamoyle ou un groupement phényle éventuellement substitué,
R¹² représente un atome d'halogène, un atome d'hydrogène, un groupement alkyle en C₁-C₄, alcoxy en C₁-C₄, alkylthio en C₁-C₄, un groupement phényle ou thiényle éventuellement substitué par des groupements alkyle en C₁-C₄, ou alcoxy en C₁-C₄ et
L⁴ et L⁵ sont identiques ou différents et représentent indépendamment l'un de l'autre un atome d'hydrogène ou bien le reste R¹ mentionné ci-dessus à l'exception de l'hydroxy,
où le colorant de formule 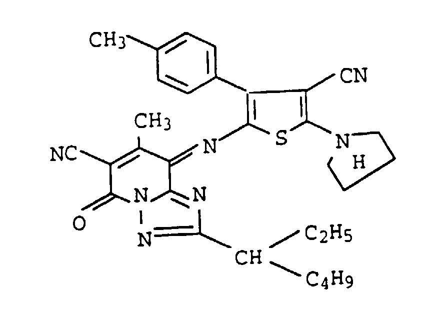 est exclu.
